# EUROPEAN PATENT SPECIFICATION

(11) **EP 0 974 240 B1**
(45) Date of publication and mention of the grant of the patent: **13.10.2004**
(21) Application number: 98913919.1
(22) Date of filing: 26.03.1998
(51) Int. Cl.: H04Q 11/04, H04L 12/24

(54) **PLANNING SYSTEM FOR BROADBAND MULTI-SERVICE CONNECTIONS**
PLANUNGSSYSTEM FÜR BREITBANDVERBINDUNGEN MIT MEHREREN DIENSTEN
SYSTEME DE PLANIFICATION POUR CONNEXIONS MULTISERVICES A BANDE LARGE

(30) Priority: 11.04.1997 GB 9707398; 27.08.1997 US 921649
(43) Date of publication of application: 26.01.2000
(73) Proprietor: Nortel Networks Limited, St. Laurent, Quebec H4S 2A9 (CA)
(72) Inventor: HAYBALL, Clive, Colin, Hertfordshire CM21 9DB (GB); BRAGG, Nigel, Lawrence, Cambridge CM1 5NX (GB); ROSS, Niall, Forbes, Nr, Great Dunnow, Essex CM6 2DT (GB); TUNNICLIFFE, Andrew, Sawbridgeworth, Herts CM21 0RL (GB)
(74) Representative: Anderson, Angela
(86) International application number: PCT/GB1998/000923
(87) International publication number: WO 1998/047307

(56) References cited:
- EP-A- 0 733 967
- EP-A- 0 748 142
- WO-A-95/35611
- US-A- 4 999 833
- LOH P K K: "ARTIFICIAL INTELLIGENCE SEARCH TECHNIQUES AS FAULTS-TOLERANT ROUTING STRATEGIES" PARALLEL COMPUTING, vol. 22, no. 8, 30 October 1996, pages 1127-1147, XP000635524

## Description

### Field of the Invention

The present invention relates to communications networks, in particular, though not exclusively to planning of multi-service connections in a hierarchical broadband network.

### Background to the Invention

Broadband communications networks must deliver a variety of services, often in combination, over transport and access networks which differ geographically in their capabilities and quality of service parameters. Also, communications data is often subject to various forms of transformation, such as compression and translation, as part of its carriage between parties involved.

Broadband networks are likely to be heterogeneous for quite some time in the future, in terms of the connectivity types which they offer and the available service gateways. There is therefore a problem when provisioning a service in matching the needs of an end user to the facilities which are available within a service provider.

Planning connections in hierarchical broadband communications networks involves similar planning a route of links and/or nodes in a simple network. However, due to the existence of the hierarchy in the broadband communications network, the routing problem can give rise to a hierarchy of routing sub-problems. A classical routing algorithm (eg Dijkstra's) could be applied to find a route between two nodes. However, the same routing problem could be applied recursively to sub-problems arising in the hierarchical network, but if a sub-problem has no solution then a higher level route must be modified.

Another complication in a heterogeneous broadband network is the differing natures of links between nodes, for example a link between two nodes may only be capable of transferring a certain type of data between the two nodes. Traffic carrying and/or transport characteristics of such nodes constitute "behaviors" of the nodes. Therefore, a corresponding hierarchy of behavior rules need to be found to describe the traffic carrying transport characteristics of individual links and/or nodes in addition to the route of links and/or nodes itself in order to fully plan a connection which provisions a service to the end user.

In US 4,999,833 (Lee), there is described a system which applies a set of heuristic rules to a knowledge base to select connectivity paths through a network. However, the connectivity paths are selected from a routing sequence based upon a simple list of communications links and so is not capable of dealing with transformation of communications data as part of its carriage over the network. Furthermore, the system relates to radio networks only rather than heterogeneous networks and so does not overcome the problems associated with planning multi-service connections over transport and access networks which differ geographically in their capabilities and quality of service parameters.

### Summary of the Invention

A novel approach outlined herein supports the creation and management of broadband service connections in an integrated manner, using a combination of structured modeling and goal-based route finding.

According to a first aspect of the present invention, there is provided a method of producing a connection plan representing at least one connection between a plurality of end points in a network comprising a plurality of nodes and a plurality of links, each node having at least one end point connecting it to a link, each link being between at least a pair of said end points, and each link having a type, wherein said connection plan comprises data describing a set of said end points and data describing said types of said links between said end points, said method comprising the steps of:
creating a layered data representation of at least part of said networks by creating a data representation of the nodes, links and end points of said connection; and
applying an algorithm to said data representation to generate said connection plan, the method being characterized in that the step of creating a data representation of said at least one part of the network comprises representing said at least part of said network as syntax data describing said nodes, links and end points and in that the step of applying an algorithm to said data representation comprises manipulating said syntax data by means of an artificial intelligence technique to obtain said connection plan.

Preferably, a syntax data representation comprises a list of at least one clause, each said clause comprising at least one term.

Said clauses may comprise assertions and implications.

Preferably, said algorithm operates to select a term of a clause representing said connection as a sub-goal and recursively attempts to solve said sub-goal.

Said sub-goal may be assigned a priority, and said algorithm selects a sub-goal with a highest priority.

An algorithm may select a sub-goal which is a clause with fewest terms.

Said algorithm may select a sub-goal according to order of its said terms.

Said algorithm may select a sub-goal with a lowest position in said network hierarchy.

Said algorithm may select said sub-goal randomly.

Said algorithm may select a clause with which to solve said sub-goal according to a position of said clause in said list of clauses.

Said algorithm may select a clause with which to solve said sub-goal by selecting a clause having a term included in said connection plan.

Said algorithm may select a clause with which to solve said sub-goal by selecting a clause which is lowest in said network hierarchy.

Said algorithm may select a clause with which to solve said sub-goal by selecting a clause with a term having smallest capacity.

Said algorithm may randomly select a clause with which to solve said sub-goal.

Preferably, said clauses represent data describing features of said network, said features selected from the set:
classes of said network nodes;
end points of said network nodes;
links of said network;
schematic representations of said link types.

A said link type may be selected from the set
binding;
realization;
behavior;
containment.

A geographical representation of said connection plan may be described.

Said connection plan is preferably implemented as a set of connections in said network.

Said representation may comprise a substantially Prolog-like syntax.

According to a second aspect of the present invention there is provided a connection planning apparatus for planning at least one connection in a network comprising a plurality of nodes and links, each node having at least one end point connecting it to a link, each link between said end points having a type, said apparatus capable of creating a connection plan comprising a set of end points and said types of links between said end points, said apparatus comprising: means for creating a layered data representation of at least part of said network by creating a data representation of the nodes, links and end points of said connection; and an inference engine comprising an algorithm which uses said data representations to generate said connection plan, the apparatus being characterized in that said means for creating a data representation of at least part of said network is arranged to create a syntax data representation describing said nodes, links and end points and in that said inference engine comprises an artificial intelligence means which acts on said syntax data representation to produce said connection plan.

Said syntax data representation may comprise a list of at least one clause, each clause comprising at least one term.

Said clauses may comprise horn clauses.

Said inference engine may select a term of a clause representing said connection as a sub-goal and recursively attempt to solve said sub-goal.

Said sub-goal may be assigned a priority, and said inference engine selects a sub-goal with a highest priority.

Said inference engine may select a sub-goal which is a clause with fewest terms.

Said inference engine may select a sub-goal according to order of its said terms.

Said inference engine may select a sub-goal with a lowest position in said network hierarchy.

Said inference engine may select said sub-goal randomly.

Said inference engine may select a clause with which to solve said sub-goal according to position of said clause in said list of clauses.

Said inference engine may select a clause with which to solve said sub-goal by selecting said clause having a term included in said connection plan.

Said inference engine may select a clause with which to solve said sub-goal by selecting a clause which is lowest in said network hierarchy.

Said inference engine may select a clause with which to solve a sub-goal by selecting a clause with a term having smallest capacity.

Said inference engine may randomly select a clause with which to solve said sub-goal.

Said clauses may represent data describing features of said network, said features selected from the set:
classes of said network nodes;
end points of said network nodes;
links of said networks;
schematic representation of link types.

A link type is suitably selected from the set
binding;
realization;
behavior;
containment.

Preferably, the connection planning apparatus further comprises means for displaying a graphical representation of said connection plan.

Said connection planning apparatus means may comprise means for implementing said connection plan as a set of connections in said network.

According to a third aspect of the present invention, there is provided a method of processing data describing a hierarchical network comprising a plurality of nodes each said node comprising a set of equipment items, and a plurality of physical links connecting said plurality of nodes, said method characterized by comprising the steps of:
representing a node equipment as a syntax data describing said node equipment;
representing a plurality of capabilities of said node equipment by creating syntax data describing said capabilities;
representing said links by syntax data describing said links, wherein said syntax data comprises a plurality of clauses; and
manipulating said clauses by means of an artificial intelligence technique to obtain a solution of connections which are capable of being transformed into a layered connection model suitable for application in said network.

Said syntax data capability representation preferably comprises:
a node identifier;
an input data type;
an output data type; and
a hierarchical network layer upon which said node appears.

Said syntax data link representation preferably comprises:
at least two nodes representing end points of said links; and
a hierarchical network layer upon which said link appears.

Said representation may comprise a substantially Prolog-like syntax.

According to a further aspect of the present invention there is provided a network management apparatus for a communications network comprising a plurality of interconnected network element devices, said network management apparatus comprising:
a plurality of device controllers each controlling at least one corresponding network element device, said plurality of device controllers comprising a plurality of device sub-controllers;
wherein a plurality of functions performed by a network element device are each represented by a corresponding respective device sub-controller, and characterized in that
a set of multi-media service connections between said device controllers are provided, said connections arranged in a manner which represents a multi-media service between said network element devices and wherein each said device sub-controller comprises:
a data storage means storing syntax data describing a function of a network element device; and a means for generating management control signals from said stored syntax data for controlling a said network element device.

According to a yet further aspect of the invention, there is provided a method of controlling a network comprising a plurality of network element devices wherein each device supports a plurality of service functions, said method comprising the steps of:
representing each network element device by a corresponding device controller;
for each device controller, representing each function capability provided by a corresponding network element device by a corresponding device sub-controller; the method being characterized by the steps of:
   linking a plurality of said sub-controllers of different device controllers in a manner which represents a layered service connection supported by said network element devices and wherein each said device sub-controller comprises:
      a data storage medium for storing syntax data describing a functionality of a network element device; and
      a control signal generating means for generating control signals from said stored syntax data for controlling a function of said network element device.

### Brief Description of the Drawings

For a better understanding of the invention and to show how the same may be carried into effect, there will now be described by way of example only, specific embodiments, methods and processes according to the present invention with reference to the accompanying drawings in which:
Fig. 1 herein illustrates schematically a portion of broadband network (in practice, a broadband network would mainly have sub-layers, nodes and connections);
Fig. 2 herein illustrates a model for an architecture of a network management system for managing network elements of the network of Fig. 1 herein;
Fig. 3 herein illustrates an arrangement of a network controller apparatus for controlling individual network elements across the network of Fig. 1 herein;
Fig. 4 illustrates schematically an Application Model representing a hierarchical network comprising instances and links between said instances;
Fig. 5 illustrates schematically an algorithm according to the preferred embodiment comprising a create representation step, a specify solution step and a search for solution step;
Fig. 6 illustrates schematically steps executed during the search for solution step identified in Fig. 5, including a select sub-goal step and a decide how to solve selected sub-goal step;
Fig. 7 illustrates schematically steps performed during the select sub-goal to solve step of Fig. 6, including a select sub-goal according to mode and priority steps and a link sub-goal selection step;
Fig. 8 illustrates priorities and modes associated with sub-goals used by the steps identified in Fig. 7;
Fig. 9 illustrates steps performed during the link sub-goal selection step of Fig. 7;
Fig. 10 illustrates steps performed during the decide how to solve selected sub-goal step of Fig. 6.
Fig. 11 illustrates a simplified Application Model;
Fig. 12 illustrates schematically steps which may be performed by the preferred embodiment whilst solving a connection problem relating to the Application Model of Fig. 11;
Fig. 13 illustrates execution of the steps of Fig. 12 on the Application Model of Fig. 11;
Fig. 14 illustrates further steps which may be executed by the preferred embodiment on the Application Model of Fig. 11; and
Fig. 15 illustrates execution of the steps of Fig. 14 on the Application Model of Fig. 11.

### Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however, to one skilled in the art, that the present invention may be practiced without using these specific details. In other instances, well known methods and structures have not been described in detail so as not to unnecessarily obscure the present invention.

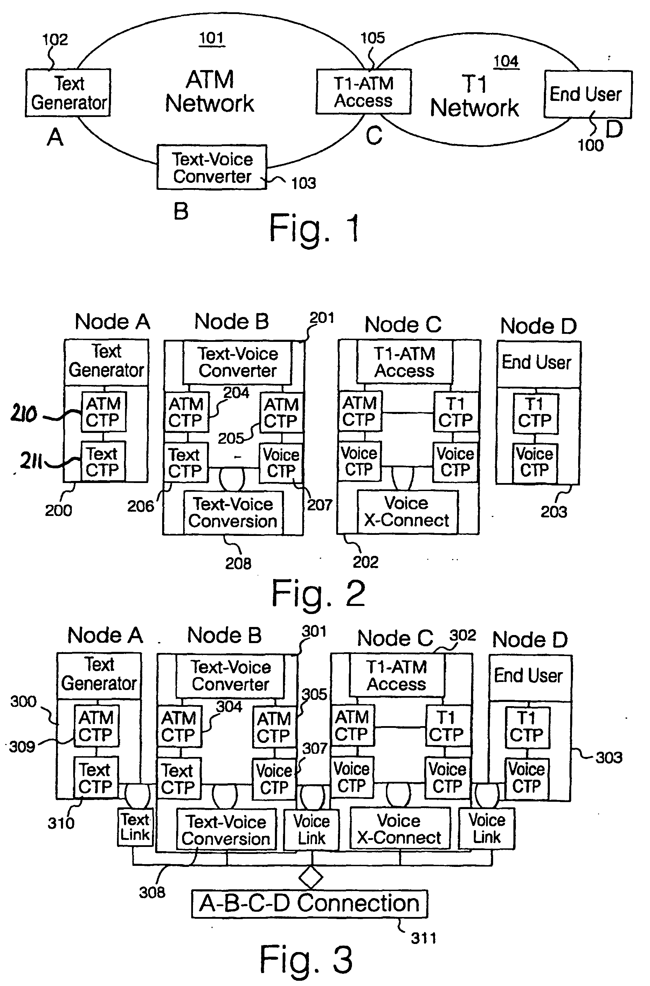

Referring to Fig. 1 herein, there is illustrated schematically a portion of broadband communications network comprising a plurality of nodes and links in which there exists a connection planning problem described with reference to a hybrid network including asynchronous transfer mode (ATM) and T1 transmission modes. An end user apparatus 100 eg a telephone can only communicate by voice signal, being connected into a public switched telephone network (PSTN) at a local exchange. Across on another side of ATM network 101 is a text generator system 102. Somewhere within the scope of the ATM network 101 is a text to voice converter 103 for converting text generated by the text generator to voice signals. Access between T1 network 104 and ATM network 101 is made via a T1-ATM access apparatus 105.

The problem in this example is that a user of the end user apparatus 100 wishes to receive a voice message from text generated by the text generator 102. The text generator 102 generates text data signals which are converted to voice signals by the text to voice converter 103, which are then relayed across the ATM network and T1 network via T1-ATM access node 105 to the end user. An operator at the text generator 102 enters text which is received as a voice signal by the end user 100 over their telephone apparatus.

This is one example of a multimedia service connection problem. In the context of general hybridized multimedia service supporting networks, there may be a large number of problems of this type, eg text to voice conversion, voice to text conversion, data conversion etc. These problems are potentially highly complex to solve, and complex to manage using a network manager system.

A problem is that not only must one be able to work out how to establish the necessary connectivity, to achieve an end-to-end service, but one must be able to map that connectivity onto the network management means to manage the physical resource hardware providing that service.

In the proposed approach herein, the connectivity and interworking capabilities offered by a broadband communications network are modeled in terms of:
(i) various transport and service sub-layers, nodes and connections between nodes;
(ii) cross-connect and interworking functions supported within nodes.

The capabilities illustrated in this example might be used to support a variety of different user services, including the insertion of automatically generated voice fragments from a library of text strings.

Figs. 2 and 3 herein illustrate one specific example of how the network element devices shown in Fig. 1 may be modeled, based on notations used within the synchronous digital hierarchy (SDH) and ATM management domains.

The notation of the model shown in Fig. 2 herein is based upon an application model concept as disclosed in the applicant's previous disclosure US 08/921,649 filed 27 August 1997, a copy of which is filed herewith, and the contents of which are incorporated herein by reference.

An application model comprises a representation of a plurality of application level elements, being elements of a management system relating to a physical resource such as a component, composite or system in which a functionality of said component, composite or system is represented independently of an internal structure of said component, composite or system.

An application level element may be capable of providing management signals relating to all aspects of managing a functionality of a component, composite or system independently of internal structure, for example providing signals describing a status or performance of a component, composite or system in terms of functionality independently of its internal structure or providing control of a component, composite or system independently of its internal structure. Suitably, application level elements are constructed from a set of managed objects, for example in accordance with the ITU-T TMN architecture standard.

An application model comprises a model for an external interface, ie a "black box" view of modeled physical resources, which can be used by a human operator or an application program.

An implementation model comprises representation of a collection of implementation level elements, which represent and interface with physical resources, and in which the specific internal layout of those resources, ie the physical and logical implementation details of physical resources are represented.

Each node of the network, comprising a physical network element device such as the text generator 102, text to voice converter 103, T1-ATM access node 105 and end user apparatus 100, is represented by a respective device controller 300, 301, 302, 303 in a network controller apparatus, operating to control node element devices of the network via operation, administration and maintenance (OAM) control signals transmitted across the network. The device controllers may comprise managed object as described in the ITU-T TMN architecture specifications. The device controllers 300-303 are structured and interconnected so as to represent the service functionality provided by their corresponding respective network element devices 102, 103, 105, 106. For example a text generator device controller 200 supports an ATM connection termination point function and a text connection termination point function. Similarly, a text to voice converter device controller 301 supports a pair of ATM connection termination point functions 204, 205, a text connection termination point function 206 and a voice connection termination point function 202, and text to voice conversion function 208.

Each device controller 300-303 comprises a plurality of sub-controllers, each of which controls a function provided by the corresponding network element device. The sub-controller may comprise managed objects as described in the ITU-T architecture specifications. For example the text generator 102 provides an ATM connection termination point facility which is controlled by ATM connection termination point sub-controller 309, and text generator 102 provides a text connection termination point which is supported by text connection termination point function sub-controller 310. Each sub-controller is implemented as a data storage device containing data signals describing functionality, eg functions provided by a device, and a means for generating function control signals for controlling that functionality. The sub-controllers of different device controllers in the network manager apparatus are interconnected through signal channels, representing service connection, links, paths and service functions.

In order to construct the network controller comprising the plurality of device controllers and constituent sub-controllers as shown in Fig. 3, firstly the network is modeled, resulting in a function model data which specifies functionality and connectivity, as shown schematically in Fig. 2 herein.

In Fig. 2 herein, each network element device is modeled in terms of the functions which it provides, and in Fig. 3 herein the network controller is constructed as a set of device controllers and sub-controllers which mirrors the functional structure of the network element devices themselves. For example a functional model 200 is prepared describing the text generator device 102. The functional model comprises a model 210 for an ATM connection termination point and a model 211 for a text connection termination point. The functional models are implemented in device controller 300 comprising part of a network controller apparatus, as an ATM connection termination point sub-controller 309 and a text connection termination point sub-controller 310.

Connections between the sub-controllers, embedded as part of the control signals sent to other sub-controllers are used to operate the corresponding network elements to provide connections, links, virtual paths and other services across the network. By reconfiguring the connections between sub-controllers, in the device controllers, the network can be managed as this interconnectivity is reflected in the actual network element devices which receive the OAM control signals from the network controller to implement these reconfigurations to the functionality of the corresponding network element devices.

The model may be formalized by translating the capabilities of each node and the connections between nodes into a syntax suitable for route finding.

The basic elements of the syntax are:
*connection (S, X, Y)*
(meaning a layer S connection between locations *X and Y*)
   and:
   *transform (S, T, X)*
   (meaning an interworking function between service types *S* and *T* at node *X* - reduced to a cross-connect function when *S=T*)

In each of the above cases, the service type may itself be expressed in terms of layered structure, eg *S* = *Voice*/*ATM* (meaning the service is a voice over ATM service).

The connection problem is now solved in terms of a planning task which takes one end of the desired service connection as its start state, the other end as its goal state, and each connection and/or transform construct as an operator. Further constraints may be added to represent the quality of service parameters or other characteristics of network components. A known artificial intelligence technique may thus be applied to solving a multimedia service connection problem by finding an optimized, or at least a workable, solution of connections and transforms using the links and nodes as components of the solution.

Once a viable solution has been found, the resultant plan may be transformed back into a layered connection model suitable for application within a network management environment based on a network controller apparatus.

There now follows an application example for modeling the capabilities of the network example of Fig. 1. The capabilities represented in Fig. 1 may be represented syntactical as follows:
*connection (text* / *ATM, A, B).*
(meaning ATM text connection between nodes A and B, ie text data may be transferred between locations A and B)
*transform (text* / *ATM, voice* / *ATM, B).*
(meaning node B is capable of converting ATM text data to ATM voice data)
*connection (voice* / *ATM, B, C).*
(meaning an ATM voice connection between nodes B and C, ie voice data may be transferred between locations B and C)
*transform (voice*/ *ATM, voice* / *T1, C).*
(meaning node C is capable of converting ATM voice data to T1 voice data)
*connection (voice* / *T1, C, D).*
(meaning T1 voice connection between nodes C and D, ie voice data may be transferred between locations C and D)

The planning goal is to connect text at node A to voice at node D. The solution (unique in this example) is a connection *A-B-C-D* with the text-voice conversion being carried out at node at *B* and voice cross-connection carried out at node C. The solution can be superimposed back onto the network model in the form of an aggregated connection 311 as shown in Fig. 3 herein, the aggregated connection 311 may be represented syntactically as follows:
*connection (text*/*ATM, A, B), transform (text*/*ATM, voice*/*ATM, B), connection (voicelATM, B, C), transform (voicelATM, voice*/*T1, C), connection (voice*/*T1, C, D)*

There will now be described possible extensions and other applications of the methods disclosed herein. The connection planning technique described above could be greatly facilitated by the pre-discovery of the "physical" connection topology of each connectivity service layer. For example, ATM networks will deploy PNNI (Private Network Node Interface) technology to allow ATM switching and end-user nodes to discover an abstract view of the ATM network topology (via peer-to-peer interaction) and to route connections across the discovered topology via selected routing algorithms. This concept could be applied to higher level connectivity services, starting perhaps with ATM adaptation layers, especially AAL2. The connections available at each connectivity service layer can be viewed in terms of Virtual Private Networks (VPNs) constructed across the next lower connection layer.

Another example of configuring a network manager using the connection planning method is the provisioning and configuration of distributed network elements. Configuration and provisioning of distributed network elements, utilizes the same technique as described hereinabove, but applied at "microcosmic" level of connections within nodes. An example would be the configuration of a signaling link between an access port and an internal frame processing device. This technique, coupled with a design tool to support the constructions system management models from component fragments, may make a major impact upon the time and effort involved in management system development.

A further formalization of the syntactical representation according to the preferred method will now be described, as well as algorithms including Al algorithms preferably executing on a network controller workstation which may be applied to data created according to the syntactical representation in order to implement it in solving problems such as broadband connections planning.

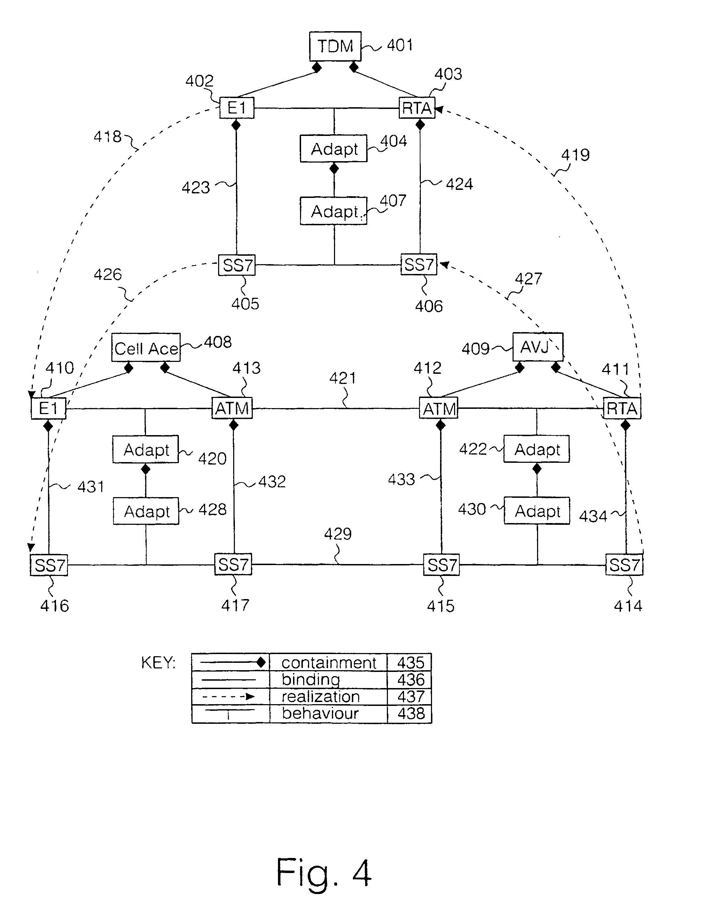

A preferred embodiment and method according to the present invention will be illustrated with examples, the first of which is shown in Fig. 4 of the accompanying drawings.

In the preferred embodiment and method, data describing at least part of the hierarchical broadband network and a connection problem to be solved is described using a syntactical representation as disclosed herein above. An algorithm is applied to the network and problem data which attempts to solve the problem by generating a connection plan comprising a set of network nodes and/or links or other data describing network resources/elements which may be allocated to a connection in order to implement it in the network. The inventors envisage that running the algorithm to generate such a connection plan may be used to select a set of network connections to be implemented which can best satisfy certain criteria, eg balanced usage of network resources, etc.

The examples described herein use notation and concepts described in the applicant's co-pending application US 08/921,649 of 27 August 1997. The example shown in Fig. 4 comprises three classes: TDM, AVJ and Cell Ace with one instance of each class, labeled 401, 408 and 409 respectively. Fig. 4 comprises an Application Model (as disclosed in the patent applications referenced hereinabove) of the three instances. An application model comprises a set of objects which represent functionalities provided by real physical resources without describing the specific implementation details of those underlying physical resources.

Fig. 4 illustrates relationships between the application model's components. The relationships are referred to herein as "links". Four types of link may exist:
- Realizations. Herein, by the term realization, it is meant a relationship between an application model and an implementation model.
- Behaviors. Herein, by the term behavior, it is meant a class which models a data transforming behavior in a physical resource, eg a network device, or a class in an application model which models a function represented by the application model.
- Containment. Herein, by the term containment, it is meant a subordinate element (eg a managed object) of an application model, which is subordinate to a superior element (managed object) of the application model. A subordinate element which is contained by a superior element may be accessible through the superior element.
- Bindings, eg, A data transfer link between the application model's components, which may be implemented by means of a physical link.

In a broadband connection planning problem, a solution to the problem may comprise a set of links and/or nodes forming a route between two nodes. A graph such as that shown in Fig. 4 may describe an Implementation Model detailing which nodes and/or links of the Application Model may be used to implement the connection. Possible routes of links existing between nodes shall be referred to herein as "physical links" and routes comprising a set of physical links selected during execution or as a result of executing the algorithm are called "logical links". Containment links 435 may be illustrated as lines between network nodes having a diamond shape at one end, denoting that a network node at the diamond end of the line contains a network node on another end of the line. A binding link between nodes may be illustrated by straight lines 436. A realization link 437 may be illustrated by dotted lines having an arrow at one end denoting that a node at the arrow end of the dotted line realizes a node at another end of the line. A behavior link 438 existing between two nodes may be illustrated by a horizontal line, each end of which is connected to one of the nodes and a vertical line near a center of the horizontal line is attached to a box indicating a nature of the behavior link. Links usually occur between end points of instances, the end points possiblyrepresenting ports on a switch for example.

A "port" is defined in recommendation G.805 as "a pair of uni-directional ports". A uni-directional port as defined in recommendation G.803 "represents the output of a trail termination source of a uni-directional link connection, or the input to a trail termination sink or uni-directional link connection". Logical ports exist within a network element and may have similar layer structures and characteristics as physical ports, but do not actually bind to any physical port externally to the network element. Logical ports may be bound to one card, or may float across a plurality of cards. The physical or logical ports of a card may all be of a same type, or several different types of port may be resident on a card, depending on the specific manufacture of the network element itself.

Specific physical or logical ports are represented in the specific implementation herein as end points. In this specification, the term "end point" is used to describe a port comprising a receive port, and (optionally) a transmit port.

In Fig. 4 TDM instance 401 appears at a top level of a class-level hierarchy and contains an E1 end point 402 and an RTA end point 403. End points 402 and 403 are linked by an adapt behavior 404. End point 402 contains (423) an SS7b end point 405 and RTA end point 403 contains (424) an SS7 end point 406. End points 405 and 406 are linked by an adapt behavior 407, which is contained by adapt behavior 404.

Cell Ace instance 408 appears at a lower level in the class-level hierarchy than TDM instance 401 and contains an E1 end point 410 and an ATM end point 413. end points 410 and 413 are linked by an adapt behavior 420. E1 end point 410 contains (431) an SS7 end point 416. ATM end point 413 contains (432) an SS7 end point 417. End points 416 and 417 are linked by an adapt behavior 428, which is contained by adapt behavior 420.

AVJ instance 409 appears at the same level of the class-level hierarchy as Cell ace instance 408 and contains an ATM end point 412 and an RTA end point 411. End points 412 and 411 are linked by adapt behavior 422. ATM end point 412 contains (433) an SS7 end point 415. RTA end point 411 contains (434) an SS7 end point 414. End points 414 and 415 are linked by an adapt behavior 430, which is contained by adapt behavior 422.

E1 end point 402 of TDM instance 401 is realized (418) by E1 end point 410 of Cell Ace instance 408. RTA end point 411 of AVJ instance 409 is realized (419) by RTA end point 403 of TDM instance 401. SS7 end point 405 of TDM instance 401 is realized (426) by S7 end point 416 of cell ace instance 408.
SS7 end point 414 of AVJ instance 409 is realized (427) by SS7 end point 406 of TDM instance 401. ATM end point 413 of Cell Ace instance 408 is linked by binding 421 to ATM end point 412 of AVJ instance 409. SS7 end point 417 of Cell Ace instance 408 is linked by binding 429 to SS7 end point 415 of AVJ instance 409.

Data describing the application model illustrated in Fig. 4 is preferably used as an input to the algorithm. As well as data describing the classes, instances and links relating to the Application Model, the input data may also comprise behavior rules and optional partial implementation rules for architecture instances which comprise pre-defined logical links. Additional input data may also be used, such as: end point types and capacities; protocol expansions; physical link capacities and end point type realization rules. Optionally, partial Implementation Models consisting of pre-defined logical links for architecture class instances may also be accepted as inputs to the algorithm. In the example of Fig. 4, the input in partial implementation model is trivial, ie it contains no pre-defined logical links.

Additionally, input to the algorithm should comprise a specified Application Model instance that is to be provisioned (typically at a top of the class level hierarchy), ie the connection problem to be solved. In the example given in Fig. 4, the specified instance to be provisioned comprises TDM instance 401. The TDM instance's E1 end point 402 and RTA end point 403 and the adapt behavior 404 between them must be provisioned, and also the two SS7 end points 405 and 406 and the adapt behavior 407 between them. The end points are preferably provisioned by realizing them, ie constructing a sequence of behaviors between the realizing end points and so on as described hereinbelow. In the example, the sequence of behaviors constructed may be:
adapt o adapt
corresponding to behavior rule:
   adapt = adapt o adapt

The Cell Ace instance 408 and AVJ instance 409 have equipment models and do not require provisioning.

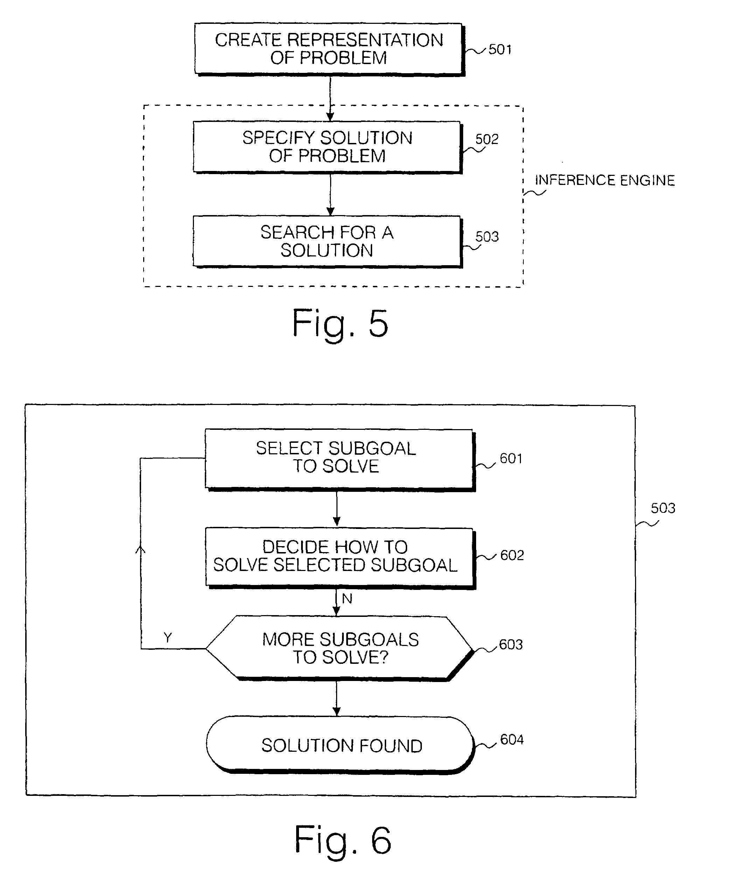

Fig. 5 of the accompanying drawings illustrates steps typically executed by the algorithm when attempting to solve a broadband connections planning problem. At step 501 a representation of the problem is created, preferably the problem representation comprises the syntactical representation as described herein and is stored in the network controller's data storage. Data comprising a list of one or more clauses may be entered into an inference engine. After the algorithm has created the representation the inference engine is applied to the representation in order to attempt to find a solution to the problem. An inference engine may comprise rules or an algorithm intended to solve a given problem, preferably by producing inferences based on facts and rules, such as those described by the syntactic representation. The inference engine preferably comprises two parts: a logic component and a control component. At step 502 the inference engine's logic component specifies what it means to solve the problem, ie defining how to provision an instance. At step 503 the inference engine's control component describes how the logic component is to be executed, ie how it will be used to search for the specified solution.

The representation of a broadband connections planning problem created at step 501 may comprise the following data:
- classes, each declared as either equipment or architecture (corresponding to equipment and architecture models as described in the patent applications referenced hereinabove) and placed in the class-level hierarchy
- end points with unique identifiers
- end point types and capacities
- physical links (defined explicitly or implicitly)
- logical links selected from the physical links
- behavior rules of the form b = b₁ o ... o b_{N} wherein the o operator denotes composition of behaviors and corresponds to a binding between behavior end points. Families of behavior rules may be defined implicitly

In the preferred embodiment, models, physical links, behavior rules and other information describing an Application Model and a connection planning problem to be solved by the algorithm may be represented textually as clauses. Clauses, in particular Hom clauses, form the basis of Prolog, a known logic programming language (see, for example, Ivan Bratko, "Prolog: Programming for Artificial Intelligence" second edition, Addison Wesley, 1990). The preferred embodiment's syntactical representation comprises a substantially Prolog-like syntax (preferably with convenient extensions such as *S={t(X)*|*p(X)}* for set construction). The syntactical representation is not necessarily a Prolog program; it preferably comprises data describing a formalism to which the algorithm's inference engine, as described hereinbelow will be applied.

Clauses may be one of three types: facts, rules and questions. Each clause usually terminates with a full stop (.). Facts declare things that are unconditionally true, for example:
*network (atm)*
declares that an object *atm* is always a *network* object. Each clause may comprise at least one object called a "term". In the example above, *atm* comprises a term. A term beginning with a lower case letter may be considered to be a constant (or an "atom"). Terms beginning with capital letters may be considered to be variables. A term inside a clause's brackets may be called an "argument" and a term prefixing the brackets a "functor".

A rule preferably comprises a condition part (on a right hand side of a :- symbol) and a conclusion part (on the left hand side of the :- symbol). The conclusion part may be called a head of the rule clause and the condition part may be called a body of the rule clause. If the condition part is true then a logical consequence of this is that the conclusion part is true.

A question may comprise a clause having a variable which is unbound, ie has not been defined as having a specified value. A question may be answered by using an inference engine algorithm which utilizes facts and rules defined to substitute the variable with another object. In a question comprising one or more unbound variable, each unbound variable may be selected as a goal, therefore all goals within a question should be satisfied. To satisfy a goal means to demonstrate that the goal logically follows from facts and rules defined.

Variable substitution primarily involves term matching. Two terms match if they are identical or if variables in both terms can be substituted with objects in such a way that after the substitution of variables the terms become identical. Conventionally in Prolog matching of goals occurs in a left to right order of terms appearing in a clause. The preferred embodiment uses a more sophisticated goal selection process as described hereinbelow.

The syntactical representation may specify a class by the following clause:
*class_info (Class, Type, Level)*
wherein *Type* may be either *equipment* or *architecture,* indicating that the class belongs to the implementation model or application model respectively; *Class* comprises an alpha-numeric identifier for the class and *Level* comprises an integer denoting the class's position in the class-level hierarchy (0 denoting a highest level usually). Thus, the *class_info* clauses for the example shown in Fig. 4 may be:
- *class_info (TDM, architecture, 0)*: representing the TDM class of the Application Model
- *class_info (Cell_Ace, equipment, 1)*: representing the Cell Ace class
- *class_info (A VJ, equipment, 1)*: representing the AVJ class

The syntactical representation's clause for an end point preferably comprises:
*endpoint (Class, Instance, Id)*
wherein *Class* to which the end point being representing by the clause belongs; *Instance* may comprise an identifier term for the end point's class instance and *Id* may be an integer which is unique to the class, making the *endpoint* clause a unique identifier for each end point in the problem. Alternatively, *Id* may be an actual identifier generated by the network controller.

The syntactical representation may also include capacity data for end points, for consistency checking of bindings or for behavior rule and physical link schemata. The end point and capacity data may be represented by the following clause:
*class_endpoint (Class, Id, Type, Capacity)*
wherein *Class, Id* and *Type* may be as in an *endpoint* clause and *Capacity* may be an integer describing a capacity of the end point being represented by the clause, for example representing bandwidth capacity. The algorithm may take into account capacity usage of end points by other connections when computing a connection plan for the specified instance.

Thus, for the problem illustrated in Fig. 4 the *class_endpoint* clauses may be:
- *class_endpoint( tdm, 1, e1, 0)*: for end point 402
- *class_endpoint( tdm, 2, rta, 0)*: for end point 403
- *class_endpoint( tdm, 3, ss7, 0)*: for end point 405
- *class_endpoint( tdm, 4, ss7, 0)*: for end point 406
- *class_endpoint( cell_ace, 1, e1, 0)*: for end point 410
- *class_endpoint( cell_ace, 2, atm, 0)*: for end point 413
- *class_endpoint( cell_ace, 3, ss7, 0)*: for end point 416
- *class_endpoint( cell_ace, 4, ss7, 0)*: for end point 417
- *class_endpoint( avj, 1, rta, 0)*: for end point 412
- *class_endpoint( avj, 2, rta, 0)*: for end point 411
- *class_endpoint( avj, 3, rta, 0)*: for end point 415
- *class_endpoint( avj, 4, rta, 0)*: for end point 414

End point types may be used by the algorithm to check for consistency of end point containment rules. End point types may be used in a physical link schemata, for example for implicitly specifying behaviors between all end points of a same time in a given class.

An instance's end point in the Application Model may be given in the syntactical representation by the following clause:
*t (Class, Instance, Id)*
wherein *Class* is preferably the instance's class; *Instance* is the class instance which the end point represented by the clause occurs and *Id* represents the identifier of the end point.

The syntactical representation's clause for a physical link may be as follows:
*link (T1, T2, Behavior)*
wherein *Behavior* may be one of *realize, bind, contain* or a specific behavior prefixed by a hyphen *(-)* representing a type of the link, ie ITS nature, that is a capability or function, of the link between end points *T1* and *T2*. Thus, for the example illustrated in Fig. 4, the *link* clauses may comprise:
- *link( t (tdm, 1, 1), t (tdm, 1, 2), -adapt )*: for adapt behavior 404 between end points 402 and 403
- *link( t (tdm, 9, 3), t (tdm, 1, 4), -adapt )*: for adapt behavior 407 between end points 405 and 406
- *link( t (tdm, 1, 1), t (cell_ace, 1, 1), realize )*: for realize link 418 between end points 402 and 410
- *link( t (tdm, 1, 2), t (avj, 1, 2), realize )*: for realize link 419 between end points 403 and 411
- *link( t (avj, 9, 1), t (avj, 1, 2), -adapt )*: for adapt behavior 422 between end points 412 and 411
- *link( t (avj, 1, 3), t (avj 1, 4), -adapt)*: for adapt behavior 430 between end points 415 and 414
- *link( t (cell_ace, 1, 1), t (cell_ace, 1, 2), -adapt )*: for adapt behavior 420 between end points 410 and 413
- *link( t (cell_ace, 1, 3), t (cell_ace, 1, 4), -adapt)*: for adapt behavior 428 between end points 416 and 417
- *link( t (cell_ace, 1, 2), t (avj, 1, 1), bind )*: for bind link 421 between end points 413 and 412
- *link( t (tdm, N, 1), t (tdm, N, 3), contain )*: for contain link 423 between end points 402 and 405
- *link( t (tdm, N,* 2), *t (tdm, N, 4), contain )*: for contain link 424 between end points 403 and 406
- *link( t (cell_ace, N, 1), t (cell_ace, N, 3), contain)*: for contain link 431 between end points 410 and 416
- *link( t (cell_ace, N, 2), t (cell_ace, N, 4), contain )*: for contain link 432 between end points 413 and 417
- *link( t (avj, N, 1), t (avj, N, 3), contain )*: for contain link 433 between end points 412 and 415
- *link( t (avj, N, 2), t (avj, N, 4), contain )*: for contain link 434 between end points 411 and 414

Symmetric rules (which include most binding and behavior links) require two clauses. For example:
*link (t (tdm, 1, 1), t (tdm, 1, 2), -adapt*
*link (t (tdm, 1, 2), t (tdm, 1, 1), -adapt*

For broadband connections planning problems of a realistic size it may be impractical to explicitly enter data describing all physical links. Therefore, physical links may be defined implicitly: for example using a physical link schema for physical link behaviors in an instance with an unlimited number of end points, any two of which may be linked by a trivial behavior (which has no effect upon data carried):
*link(t (atm_switch, N, A), t (atm_switch, N, B),-trivial):- integer(A), integer(B)*
wherein *integer* generates an unbounded series of integers. Alternatively, instead of *integer* a predicate may be used which interrogates a database stored by the network controller in order to obtain an end point identifier. Other possible uses may include:
- Handling realizations between contained end points: if *T1* physically realizes *T2, T1* contains *T3* and *T2* contains *T4,* then *T3* physically realizes *T4.* Adding a rule describing this realization and containment links to a *link* clause may be achieved by only explicitly specifying realizations between end points at tops of containment links.
- Grouping sets of instances by location, allowing physical links between any two end points with matching types at the same location.
- Specifying only physical links between equipment end points.
- Physical links between architecture end points may be implicit.

A logical link may be described by the syntactical representation by the following clause:
*logical_link (T1, T2, Links, IM):- link (T1, T2, Link), add_logical_link (T1, T1, Link, IM)*
wherein the *link* term may represent a physical link selected for inclusion in the logical link being represented by the clause (which may be considered as a first/head link in a list of links); *add_logical_link* may be a term for adding subsequent links to the list which comprise the logical links and *IM* may be a term containing a variable for each possible pair of end points and each variable becomes bound when the two end points are assigned a logical link.
*logical _link* comprises a record of created logical links which is maintained during execution of the algorithm. The record is preferably backtrackable because logical links are removed on backtracking. When adding a logical link, other logical links must often be forbidden. For example, it is incorrect to select logical behaviors between end points T1 and T2 and between T3 and T4, where T1 contains T3 and T4 contains T2. This relationship may be referred to as "No Klein Bottle Rule" and may be implemented by binding appropriate *IM* variables to a special term *forbidden.* As variable bindings are used for forbidding logical links, these correctly become re-enabled upon backtracking.

A consequence of using variable bindings to represent logical links is that no two end points may be linked by more than one kind of logical link simultaneously, though on backtracking different links may be assigned. Another consequence is that the algorithm can "create" the same logical link more than once without ill effect. This property allows a partial Implementation Model to be specified as part of the broadband connections planning problem input, simply by creating predefined logical links.

The syntactical representation may describe behavior rules using the following clause:
*behavior_rule (b,[b1,...,bN])*
which may represent the behavior b = b₁ o ... o b_{N} wherein the o operator denotes composition of behaviors, and corresponds to a binding between end points. The *trivial* behavior may be defined as:
b *= trivial* o b = b o *trivial*

The *behavior_rule* clause may be generalized to include operators corresponding to links other than bindings. The behaviors *b1*... b_{N} may also be compound terms containing parameters as arguments.

Families of behavior rules may be described by the syntactical representation by clauses such as the following:
*behaviour_rule (B, [B*|*Bs]): -behvaior_rule_generator(B, Bs). behaviour_rule (B, [trivial*|*Bs]): B\= trivial behavior_rule (B, Bs) behaviour_rule_generator (B, ▱): -behavior_rule_generator (B, [B*|*Bs])*

These clauses may generate an unbounded number of behaviorals such as:
*adapt = adapt*
*adapt = adapt o adapt*
*adapt = adapt o trivial o adapt ...*

These clauses may be generalized to handle other operators and rules.

The input to the algorithm also includes the specific instance to be provisioned, ie a goal of the broadband connections planning problem. The syntactical representation of the problem's goal may be:
*:- provision_instance (T1, T2, B, IM) .*
wherein T1 and T2 are bound to end points on the same instance: *B* to a behavior and *IM* is unbound. Solving the goal binds IM to a representation of the implementation model.

The syntactical representation of the specific instance to be provisioned in the example of Fig. 4, ie end points 1 and 2 of *tdm* instance 401, may be:
*:- provision_instance (t (tdm, 1, 1), t (tdm, 1, 2), adapt, IM)*

Once the syntactical representation of the problem has been created and input into the algorithm, a syntactical representation specifying what it means to solve the problem may be created by the algorithm at step 502 by the inference engine's logic component. The specification is preferably a recursive description of what it means to provision an instance, specifically two of its end points and a behavior link between them.

In order to solve the broadband connection planning problem, the specified instance must be provisioned down to equipment instances. Rules for provisioning are preferably:
- To provision an instance: given two end points on an application model instance and a logical behavior between them:
   if the instance comprises *equipment* then the instance is provisioned
   otherwise the instance comprises *architecture* therefore provision the instance's behavior and two end points.
- To provision a behavior: given a behavior B, realize its two end points by two other end points (T1, T2) and provision (T1, T2). Find a behavior rule B = B1 o ... o B_{N} and construct a sequence of logical behaviors B1 o ... o B_{N} and bindings between T1 and T2. Provision each new end point in the sequence.
- To provision an end point: provision any end point contained by it, also if its Application Model class comprises *architecture* then realize the end points by another end point and provision that end point too.

The syntactical representation of the component may be as follows:
*provision_instance ( T1, T2, B, IM) :-*
   *T1 = t ( Class, Instance, Id1 ) ,*
   *class_info ( Class, Type, _) ,*
   *logical_link ( T1, T2, -B, IM),*
   *behavior_rule ( B, Bs ) ,*
   *provision_behavior ( Type, Bs, T1, T2, IM) .*
*provision_behavior ( equipment, Bs, T1, T2, IM) .*
*provision_behavior ( architecture, Bs, T1, T2, IM) :-*
   *logical_link ( T1, T1R, realize, IM) ,*
   *logical_link ( T2, T2R, realize, IM) ,*
   *construct_sequence ( Bs, T1R, T2R, IM) ,*
   *provision_endpoints ( [T1R, T2R], IM) .*
*construct_sequence ( [Bs], T1, T2, IM) :-*
   *logical_link ( T1, T2, -B, IM) ,*
*construct_sequence ( [B*|*Bs], T1, T2, IM) :-*
   *logical_link ( T1, TA, -B, IM) ,*
   *logical_link ( TA, TB, bind, IM) ,*
   *provision_endpoints ( [TA, TB], IM) ,*
   *construct_sequence ( Bs, TB, T2, IM) .*
*provision_endpoints ( ▱, IM) .*
*provision_endpoints ( [T*|*Ts], IM) :-*
   *provision_endpoints ( T, IM) ,*
   *provision_endpoints ( Ts, IM) .*
*provision_endpoints ( T , IM) :-*
   *T = t ( Class, Instance, Id) ,*
   *class_info ( Class, Type,_) ,*
   *realize_endpoint ( Type, T, IM)*
   *Ts = { TC* | *link ( T, TC, contain ) } ,*
   *provision_endpoints ( Ts, IM).*
*realize_endpoint ( equipment, T, IM) .*
*realize_endpoint ( architecture, T, IM) :-*
   *logical_link ( T, T1, realize, IM) ,*
   *provision_endpoint ( T1, IM) .*

At step 503 the inference engine's control component is used to execute the logic component. In the preferred embodiment, the algorithm utilizes artifical intelligence techniques which are intended to produce a more efficient solution to a given broadband connection and planning problem. The artificial intelligence techniques include:
- Hierarchical planning: a planning problem may be decomposed into a hierarchy of sub-problems, the hierarchical planning principle solves higher level problems first, and treats those at lower levels as details to be solved later. This usually breaks down large problems into more tractable sub-problems. If a sub-problem has no solution then a way may be found to modify the higher level solutions. As a broadband connection planning problem as described according to the preferred embodiment has two natural hierarchies, the Application Model class level hierarchies and instance level provisioning hierarchies, these may be used as hierarchies by an algorithm incorporating the hierarchical planning principle. If a sub-problem has no solution them higher level solutions may be modified by backtracking.
- First fail principle: during a search for a solution there is typically a conjunction of sub-goals to solve, each with a number of solutions, for example there may be several end points that must be bound to other (unspecified) end points. The first fail principle recommends selecting a sub-goal with the fewest solutions. This principle results in a higher probability of detecting early failure of the search. Two special cases of the first fail principle may be particularly beneficial:
   if any sub-goal has no solutions, then select it and backtrack immediately. The benefits of this selection is that failure of a sub-problem should be detected as soon as possible to avoid wasted searches on other sub-problems.
   if any sub-goal has exactly one solution, then select it. Selecting such a solution involves no arbitrary choices and therefore cannot lead to a combinatorial explosion, but may create new restrictions on other sub-goals which lead to earlier failure detection.
- Hill-climbing: a more intelligent variant of a depth first search that may be used if an evaluation function is available. At each point in the search an evaluation function assigns a value to alternatives, based upon an estimate of how close the search is to its goal. The alternative with the closest estimate is selected. If backtracking occurs then a next best solution is tried, and so on until all solutions have been tried. The preferred embodiment can use the hill-climbing principle with an evaluation function based upon several criteria.

The preferred embodiment's algorithm preferably places a higher priority on the first fail principle than the hierarchical principle and hill-climbing may be applied orthogonally. The preferred embodiment of the algorithm's control component preferably uses two sets of rules using its execution: computation rules and selection rules.

Fig. 6 of the accompanying drawings illustrates steps executed by the control component during step 503 of Fig. 5. At step 601 the control component uses its computation rule in order to select a sub-goal to solve. In logic programming terms a sub-goal may be an atom which is solved by matching it with a matching clause head, ie attempt to determine a set of values for variables in the sub-goal such that the truth of the sub-goal follows from the input clauses.

The computation rule decides an order in which sub-goals are solved, sub-goal order selection being dynamic, resulting in a co-routing strategy. The rules are chosen to avoid floundering, ie entering a deadlocked situation so that a situation wherein a conjunction of sub-goals of which none may be selected is preferably avoided.

At step 602 the control component decides how to solve the selected sub-goals using the selection rule. At step 603 a question is asked whether more sub-goals are to be solved in order to solve the specified overall broadband connection problem. This may arise due to the recursive nature of the inference engine, requiring it to select all terms in a clause as sub-goals in order to solve the problem. If the question asked at step 603 is answered in the affirmative then control passes back to step 601, otherwise control passes on to step 604 wherein the solution found may be returned as an output of the algorithm.

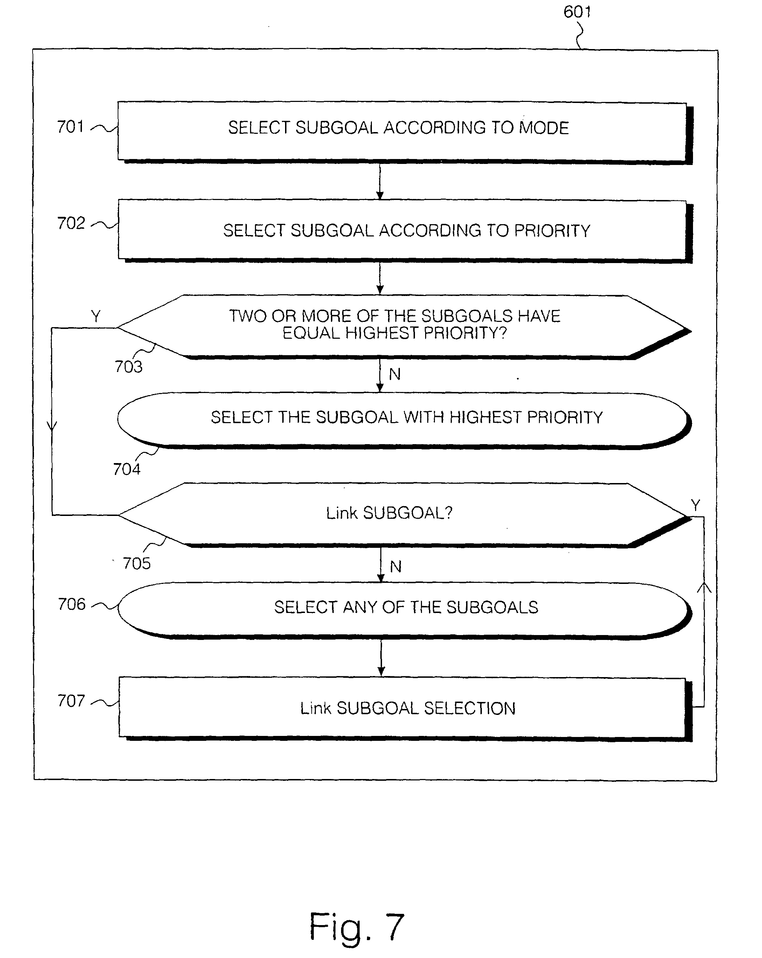

Fig. 7 of the accompanying drawings illustrates the steps executed by the computation rule during step 601 of Fig. 6. At step 701 a sub-goal may be selected according to its mode, the mode being as described hereinbelow. At step 702 a sub-goal may be selected according to its priority, the priority being as described hereinbelow. At step 703 a question is asked whether selected sub-goals have equal priority. If the question asked at step 703 is answered in the negative then control is passed to step 704 wherein a sub-goal with a highest priority value is selected. If the question asked at step 703 is answered in the affirmative, the control is passed on to step 705. At step 705 the question is asked whether the selected sub-goals comprise a *link* sub-goal. If the question asked at step 705 is answered in the affirmative, then any (random) sub-goal from the selected sub-goals may be selected. If the question asked at step 705 is answered in the negative then control is passed on to step 707, wherein a *link* sub-goal selection process may be executed.

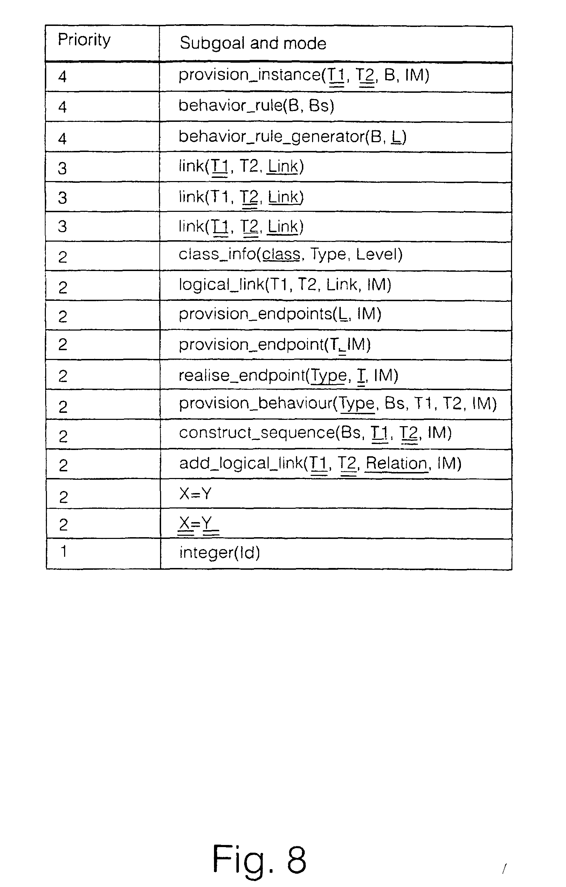

Fig. 8 of the accompanying drawings shows the modes and priorities of sub-goals which may arise during execution of the algorithm. Modes are denoted by underlining arguments. A sub-goal may be selected if its underlined arguments are non-variables and its doubly underlined arguments are ground terms; states of its other arguments may not be considered. Priorities may be used to select among sub-goals if several may be selectable, a sub-goal with a highest priority value usually being selected first.

| **Priority** | **Subgoal and mode** |
|---|---|
| 4 | provision_instance ( T1, T2, B, IM) |
| 4 | behavior_rule (B, Bs) |
| 4 | behavior_rule_generator (B, L) |
| 3 | link (T1, T2, Link) |
| 3 | link (T1, T2, Link) |
| 3 | link (T1, T2, Link) |
| 2 | class_info (Class, Type, Level) |
| 2 | logical_link (T1, T2, Link, IM) |
| 2 | provision_endpoints (L, IM) |
| 2 | provision_endpoint ( T, IM) |
| 2 | realize_endpoint (Type, T, IM) |
| 2 | provision_behavior (Type, Bs, T1, T2, IM) |
| 2 | construction_sequence (Bs, T1, T2, IM) |
| 2 | add_logiclink (T1, T2, Relation, IM) |
| 2 | X=Y |
| 2 | X\=Y |
| 1 | integer (Id) |

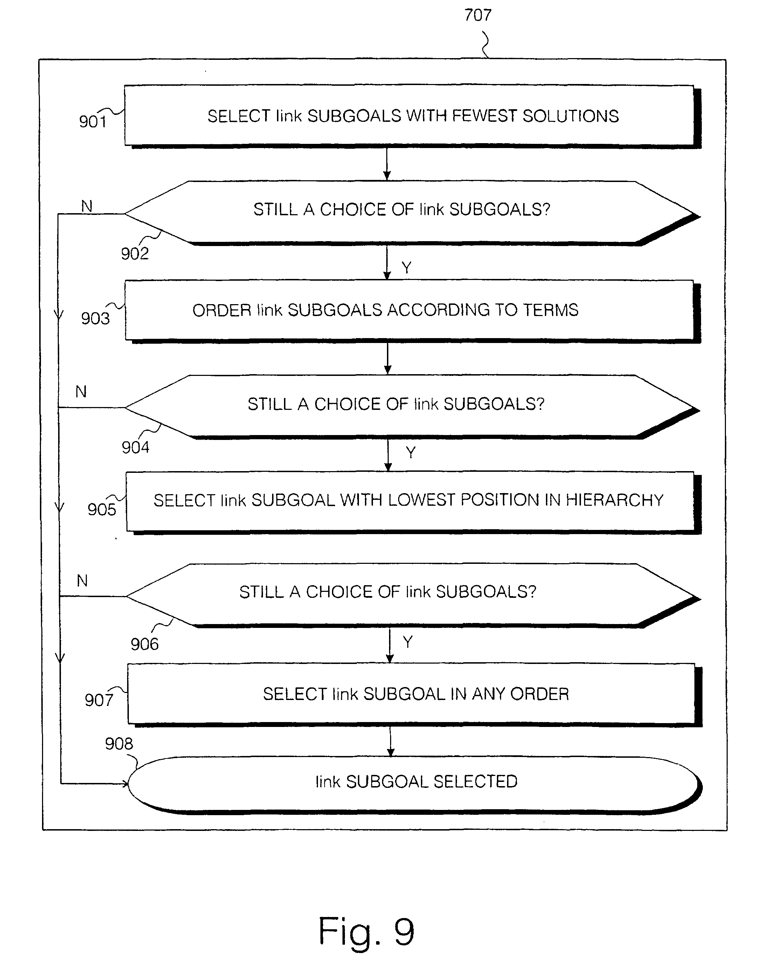

Fig. 9 of the accompanying drawings illustrates steps preferably executed by the algorithm during *link* sub-goal selection step 707 of Fig. 7. At step 901 a *link* sub-goal with fewest solutions is selected. This selection is an application of the first fail principle. The selection preferably takes into consideration physical link schemata as these are usually executed in order to find all solutions, therefore it is not sufficient to merely count a number of matching clauses.

At step 902 the question is asked whether there is still a choice of *link* sub-goals. If the question asked at step 902 is answered in the affirmative then control is passed on to step 903. At step 903 the algorithm preferably selects the *link* sub-goal in an order based on a value of their *link* argument. The order of preference may be: *-Behaviour, binding, contain, realization.* This selection is an application of the hierarchical planning principle, which postpones solving sub-problems low in the provisioning hierarchy and also those low in the containment hierarchy.

At step 904 the question is asked whether there is still a choice of *link* sub-goals. If the question asked at step 904 is answered in the affirmative then control is passed on to step 905. At step 905 then the *link* sub-goal with a lowest position in the class-level hierarchy, as specified by its *class_info* clause is selected. The position may be calculated by summing depths of the link's end points' instances in the class-level hierarchy (the top level having depth 0). This selection is another application of hierarchical planning.

At step 906 a question is asked whether there is still a choice of *link* sub-goals. If the question asked at step 906 is answered in the affirmative then control is passed on to step 907. At step 907 the *link* sub-goal may be selected in any (random) order and control is passed onto step 908.

If a question asked at any one of steps 902, 904 or 906 is answered in the negative then control is passed onto step 908. At step 908 the *link* sub-goal selected before control was passed to step 908 may be returned as an output of *link* sub-goal selection step 707.

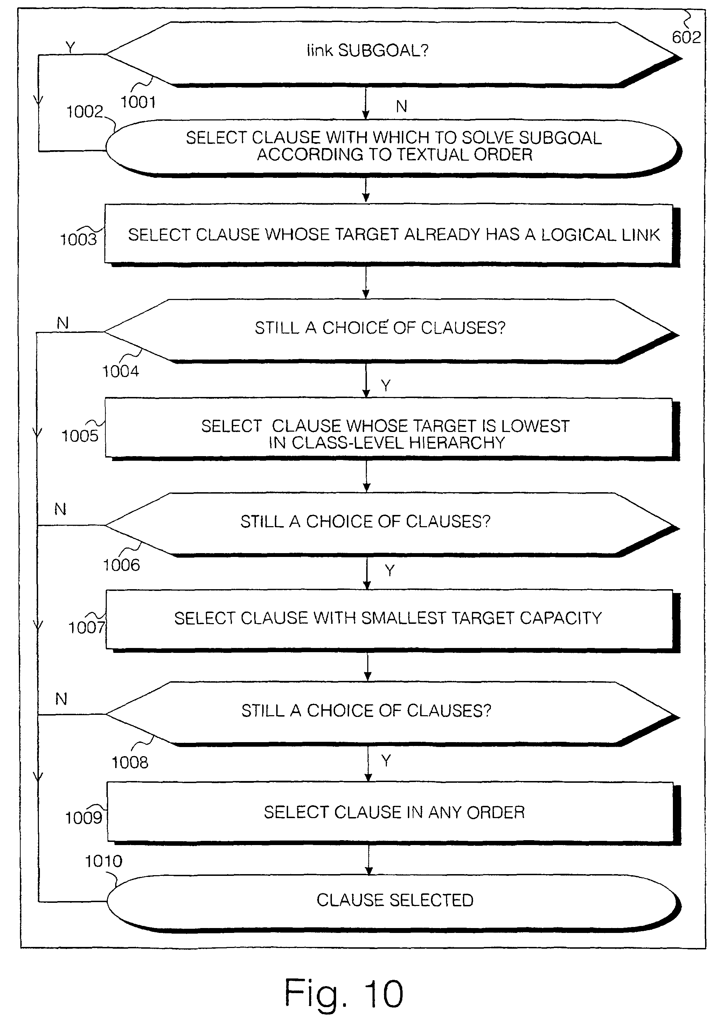

Fig. 10 of the accompanying drawings illustrates steps preferably executed by the algorithm's selection rule when it decides how to solve the selected sub-goal at step 602 of Fig. 6. The algorithm decides how to solve the selected sub-goal by choosing a clause which has a term comprising the sub-goal. At step 1001 a question is asked whether a selected sub-goal is a *link* sub-goal. If the question asked at step 1001 is answered in the negative then control is passed on to step 1002. At step 1002 a clause which the algorithm select in order to attempt to solve the sub-goal is chosen according to its textual order, ie its position in the algorithm's input clause list. The result of step 1002 may then be returned as an output of step 602.

If the question asked at step 1001 is answered in the affirmative then control is passed to step 1003. At step 1003 an unbound argument of the *link* sub-goal is selected. The unbound argument may be called a "target". A clause whose target already has a logical link is preferably selected.

At step 1004 a question is asked whether there is still a choice of clauses. If the question asked at step 1004 is answered in the affirmative then control is passed on to step 1005. At step 1005 a clause whose target is lowest in the class-level hierarchy is selected. This selection is an application of the hill-climbing principle which aims to achieve provisioning with as few instances as possible.

At step 1006 a question is asked whether there is still a choice of clauses. If the question asked at step 1006 is answered in the affirmative then control is passed on to step 1007. At step 1007 a clause whose target capacity is smallest is selected. This selection is another application of the hill-climbing principle which aims to minimize wasted end point capacity.

At step 1008 a question is asked whether there is still a choice of clauses. If the question asked at step 1008 is answered in the affirmative then control is passed on to step 1009. At step 1009 a clause is selected in any (random) order and control is passed on to step 1010.

If any one of the questions asked at step 1004, 1006 or 1008 is answered in the negative, control is passed on to step 1010. At step 1010 the clause selected by the algorithm before control was passed on to step 1010 may be returned as an output of step 602.

There follows a condensed trace showing how the example of Fig. 4 entered into the algorithm in the syntactical representation described hereinabove may be solved. For simplicity, the trace does not demonstrate the algorithm's selection rule, nor all the artificial intelligence techniques used to guide the inference engine's search, but it does illustrate the co-routing nature of the computation rule, interleaving of logical link selection and behavior rule construction. However, it will be appreciated by those skilled in the art that the algorithmic steps illustrated with reference to Fig. 7, Fig. 9 and Fig. 10 hereinabove could be implemented and demonstrated using a substantially similar trace technique. For readability, some intermediate steps have been omitted from the trace, again, those skilled in the art will appreciate that these details may be inferred from material disclosed. Herein variable *IM* which contains the algorithm's representation of the Implementation Model is shown as an unbound variable (for brevity) but its contents shall be summarized whenever they change (whenever an *add_logical_link* sub-goal is solved).

The trace preferably starts with initial goal (to provision *tdm* instance 401):
*provision_instance (t (tdm, 1, 1), t (tdm, 1, 2), adapt, IM)*
and no logical links in *IM (IM = ▱)*. Select *provision_instance* (more precisely, resolve atom with that predicate symbol):
   *class_info (tdm, Type, _),*
   *T1=t (tdm, 1, Id1) ,*
   *T2=t (tdm, 1, Id2) ,*
   *logical_link (T1, T2, -B, IM) ,*
   *behavior_rule (B, Bs) ,*
   *provision_behavior (type, Bs, T1, T2, IM) ,*
   *provision_endpoints ( [T1, T2], IM) ,*

Select *class_info,* = (twice), *logical_link, behavior_rule, provision_endpoints:*
*link (t (tdm, 1, Id1) , t (tdm, 1, Id2) , -B) ,*
*add_logical_link (t (tdm, 1, Id1) , t (tdm, 1, Id2) , -B, IM) ,*
*behavior_rule_generator (B, BS1) ,*
*provision_behavior (architecture, [B*|*Bs1] , t (tdm, 1, Id1) , t (tdm, 1, ID2), IM)*
*provision_endpoint (t (tdm, 1, ID1), IM) ,*
*provision_endpoint (t (tdm, 1, ID2), IM) ,*

Now there is a *behavior_rule_generator* sub-goal which cannot yet be solved because its list in unbound. The algorithm is guided by logical links but each logical link is immediately tested for consistency against the partially-constructed behavior rule, which is currently:
B = B o Bs1
where *B* and *Bs1* are unbound.

Now select *link* and *provision_behavior*:
*add_logical_link (t (tdm, 1, 1) , t (tdm, 1, 2), -adapt, IM) ,*
*behavior_rule_generator (adapt, Bs1) ,*
*logical_link (t (tdm, 9, 1), T1R, realize, IM) ,*
*logical_link (t (tdm, 1, 2), T2R, realize, IM) ,*
*construct_sequence ( [adapt* |*Bs1], T1R, T2R, IM),*
*provision_endpoints ( [T1R, T2R, IM),*
*provision_endpoints ( t (tdm, 1, 1), IM) ,*
*provision_endpoints ( t (tdm, 1, 2), IM) .*

Solving *link* has bound *B* to *adapt* so the behavior rule is now:
*adapt = adapt o Bs1*

Now select *add_logical_link, logical_link* (twice) and *provision_endpoints:*
*behavior_rule_generator (adapt, Bs1)*,
*link (t (tdm, 1, 1) , T1R, realize, IM) ,*
*add_logical_link (t (tdm, 1, 1) , T1R, realize, IM) ,*
*link (t (tdm, 1, 2), T2R, realize, IM) ,*
*add_logical_link (t (tdm, 1, 2) , T2R, realize, IM) ,*
*construct_sequence ([adapt I Bs1], T1R, T2R, IM) ,*
*provision_endpoint (T1R, IM) ,*
*provision_endpoint (T2R, IM) ,*
*provision_endpoint (t (tdm, 1, 1), IM) ,*
*provision_endpoint (t (tdm, 1, 2), IM) .*

Since *add_logical_link* was solved there is now a nonempty *IM*:
*t (tdm, 1, 1) adapt t (tdm, 1, 2)*
which is the logical *adapt* behavior 404 between the endpoints 1 and 2 of TDM instance 401. Now select both *link* sub-goals:
*behavior_rule_generator (adapt, Bs1) ,*
*add_logical_link (t (tdm, 1, 1), t (cell_ace, 1, 1), realize, IM),*
*construct_sequence ( [adapt* | *Bs1], t (cell_ace, 1, 1) , t (avj, 1, 2), IM) ,*
*provision_endpoint (t (cell_ace, 1, 1), IM) ,*
*provision_endpoint (t (avj, 1, 2), IM) ,*
*provision_endpoint (t (tdm, 1, 1), IM) ,*
*provision_endpoint (t (tdm, 1, 2), IM) ,*
*provision_endpoint (t (avj, 1, 2), IM) ,*
*provision_endpoint (t (tdm, 1, 1), IM) ,*
*provision_endpoint (t (tdm, 1, 2), IM)*

The *IM* is now:
*t (tdm, 1, 1) adapt t (tdm, 1, 2)*
*t (tdm, 1, 1) realize t (cell_ace, 1, 1)*
*t (tdm, 1, 2) realize t (avj, 1, 2)*
*t (cell_ace, 1, 1) adapt t (cell_ace, 1, 2)*

*Select add_logical_link and construct_sequence:*
*behavior_rule_generator (adapt, [B]) ,*
*provision_endpoint (t (cell_ace, 1, 2) , IM) ,*
*provision_endpoint (t (avj, 1, 1) IM) ,*
*logical_link (t (avj, 1, 1) , t (avj, 1, 2), -B, IM) ,*
*provision_endpoint (t (cell_ace, 1, 1) , IM) ,*
*provision_endpoint (t (avj, 1, 2) , IM) ,*
*provision_endpoint (t (tdm, 1, 1) , IM) ,*
*provision_endpoint (t (tdm, 1, 2) , IM)*

The current behavior rule is now:
*adapt = adapt o B*
and the *IM* is now:
*t (tdm, 1, 1) adapt t (tdm, 1, 2)*
*t (tdm, 1, 1) realize t (cell_ace, 1, 1)*
*t (tdm, 1, 2) realize t (avj, 1, 2)*
*t (cell_ace, 1, 1) adapt t (cell_ace, 1, 2)*
*t (cell_ace, 1, 2) bind t (avj, 1, 1)*

Select *logical_link* and *behavior_rule_generator.*
*provision_endpoint (t (cell_ace, 1, 2) , IM) ,*
*provision_endpoint (t (avj, 1, 1) , IM) ,*
*link (t (avj, 1, 1), t (avj, 1, 2, -adapt) ,*
*add_logical_link (t (avj, 1, 2), -adapt, IM) ,*
*provision_endpoint (t (cell_ace, 1, 1) , IM) ,*
*provision_endpoint (t (avj, 1, 2) , IM) ,*
*provision_endpoint (t (tdm, 1, 1) , IM) ,*
*provision_endpoint (t (tdm, 1, 2) , IM) .*

The behavior rule is now completely constructed:
*adapt = adapt o adapt*

Select *add_logical_link* and *link:*
*provision_endpoint (t (cell_ace, 1, 2) , IM) ,*
*provision_endpoint (t (avj, 1, 1) , IM) ,*
*provision_endpoint (t (cell_ace, 1, 1) , IM) ,*
*provision_endpoint (t (avj, 1, 2) , IM) ,*
*provision_endpoint (t (tdm, 1, 1) , IM) ,*
*provision_endpoint (t (tdm, 1, 2) , IM).*

The *IM* is now:
*t (tdm, 1, 1) adapt t (tdm, 1, 2)*
*t (tdm, 1, 1) realize t (cell-_ace, 1, 1)*
*t (tdm, 1, 2) realize t (avj, 1, 2)*
*t (cell_ace, 1, 1) adapt t (cell_ace, 1, 2)*
*t (cell_ace, 1, 2) bind t (avj, 1, 1)*
*t (avj, 1, 1) adapt t (avj, 1, 2)*
since the class type of each of the *cell*_ace and *avj* instances is equipment, all the sub-goals may be solved except:
provision_endpoint (t (tdm, 1, 1))
provision_endpoint (t (tdm, 1, 2))

Solving these sub-goals leads to the contained endpoints *t (tdm, 1, 3)* and *t (tdm, 1, 4)*. The logical behavior *adapt* is found between them and they are provisioned exactly as above, except that no further endpoint and the TDM has been provisioned with the following Implementation Model, which for the example of Fig. 4 comprises all physical links selected as logical links:

| IM | link's label in Fig. 4 |
|---|---|
| *t (tdm, 1, 1) adapt t (tdm, 1, 2)* | 404 |
| *t (tdm, 1, 1) realize t (cell_ace, 1, 1)* | 418 |
| *t (tdm, 1, 2) realize t (avj, 1, 2)* | 419 |
| *t (cell_ace, 1, 1) adapt t (cell_ace, 1, 2)* | 420 |
| *t (cell_ace, 1, 2) bind t (avj, 1, 1)* | 421 |
| *t (avj, 1, 1) adapt t (avj, 1, 2)* | 422 |
| *t (tdm, 1, 1) contain t (tdm, 1, 3)* | 423 |
| *t (tdm, 1, 2) contain t (tdm, 1, 4)* | 424 |
| *t (tdm, 1, 3) adapt t (tdm, 1, 4)* | 407 |
| *t (tdm, 1, 3) realize t (cell*_*ace, 1, 3)* | 426 |
| *t (tdm, 1, 4) realize t (avj, 1, 4)* | 427 |
| *t (cell_ace, 1, 3) adapt t (cell_ace, 1, 4)* | 428 |
| *t (cell_ace, 1, 4) bind (avj , 1, 3)* | 429 |
| *t (avj, 1, 3) adapt t (avj, 1, 4)* | 430 |

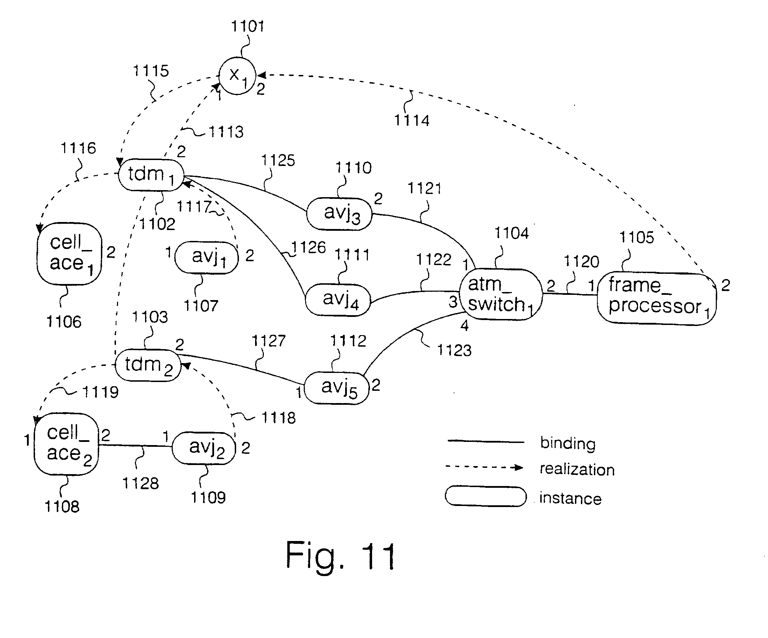

There now follows a second example of the execution of the algorithm solving another broadband connection problem. Fig. 11 of the accompanying drawings illustrates a graph which represents a simplified Application Model. All physical bindings and realizations for the Application Model are shown on the graph, although physical behaviors are not shown. To simplify the description of the diagram and the execution of the algorithm on a syntactical representation of the nodes and links shown in the graph, the following points should be noted:
- behavior rules are ignored
- there is no end point containment, we assume that contained end points (for example those of type SS7) do not exist. End points are shown as numerals near class instances (shown as oval boxes). Again, realization links are illustrated as dotted lines with an arrow head and binding links are shown as solid lines.

The example of Fig. 11 comprises 6 classes: *x, atm_switch, tdm, frame_processor, cell_ace* and avj. Class *x* is at a top level of the class-level hierarchy; *tdm, frame_processor* and *atm_switch* are on a level under *x* and *avj* and *cell*_*ace* are on a third level below. A first instance of the *x* class 1101 may have its end point 1 realized (1115) by end point 1 of a first *tdm* instance 1102 and also realized (1113) by end point 1 of a second *tdm* instance 1103. End point 2 of *x* instance 1101 may be realized (1114) by end point 2 of *frame-_processor* instance 1105.

End point 1 of *tdm* instance 1102 may be realized (1116) by end point 1 of a first *cell_ace* instance 1106. End point 2 of *tdm* instance 1102 may be realized (1117) by end point 2 of a first *avj* instance 1107. End point 1 of *tdm* instance 1103 may be realized (1119) by end point 1 of a second *cell_ace* instance 1108. End point 2 of *tdm* instance 1103 may be realized (1118) by end point 2 of a second *avj* instance 1109. End point 2 of *cell_ace* instance 1108 and end point 1 of *avj* instance 1109 are linked by binding 1128.

End point 1 of *frame_processor* instance 1105 is linked by binding 1120 to end point 2 of *atm_switch* instance 1104. End point 1 of *atm_switch* instance is linked to end point 2 of a third *avj* instance 1110 by binding 1121. End point 3 of *atm* switch instance 1104 is linked to end point 2 of a fourth *avj* instance 1111 by binding 1122. End point 4 of *atm_switch* instance 1104 is linked to end point 2 of a fifth *avj* instance 1112 by binding 1123.

End point 1 of *avj* instance 1110 is linked to end point 2 of *tdm* instance 1102 by binding 1125. End point 1 of *avj* instance 1111 is linked to end point 2 of *tdm* instance 1102 by binding 1126. End point 1 of *avj* instance 1112 is linked to end point 2 of *tdm* instance 1103 by binding 1127.

The syntactical representation of the application model shown in Fig. 11 may be substantially similar to the syntactical representation method described hereinabove. For example, clauses defining the example's classes may be as follows:
*class_info (x, architecture, 0)*
*class_info (tdm, equipment, 1)*
*class_info (frame_processor, equipment, 1)*
*class_info (atm_switch, equipment, 1)*
*class_info (avj, equipment, 2)*
*class_info (cell_ace, equipment, 2)*

It will be appreciated by those skilled in the art that end point definitions according to the preferred embodiment may also be created for nodes of Fig. 11, for example, end point 2 of the third *avj* instance 1110 may be represented by the following clause:

### endpoint (avj, 3, 2)

Links between the nodes may also be created using the syntactical representation, for example, the realize link 1116 between end point 1 of the first *tdm* instance 1102 and end point 1 of the first *cell_ace* instance 1106 may be represented by the following clause:
*link (t (tdm, 1, 1) , t (cell_ace, 1, 1) , realize) .*

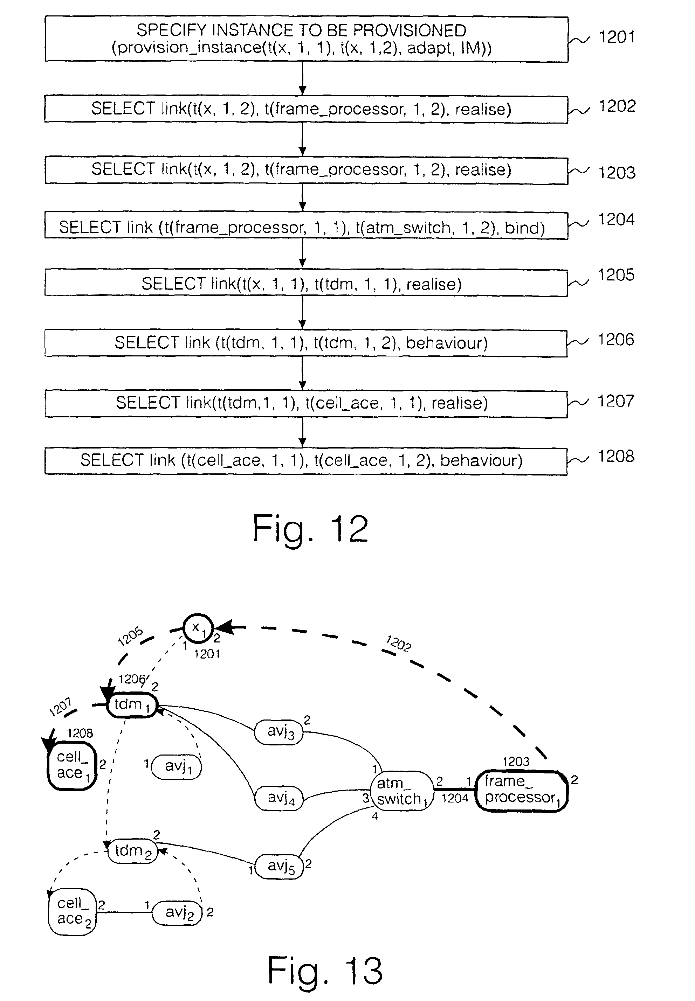

Figs. 12 to 15 of the accompanying drawings along with the corresponding description given hereinbelow will demonstrate the execution of the algorithm according to the preferred embodiment, including use of the artificial intelligence techniques such as first fail, hill-climbing and hierarchical planning. The result of the algorithm's execution will again be an Implementation Model (IM) comprising selected logical links, which may be expressed according to the syntactical representation.

Fig. 12 of the accompanying drawings illustrates steps which may be performed by the preferred embodiment of the algorithm whilst attempting to solve a broadband connection problem on the application model of Fig. 11 up to a first occurrence of the algorithm back-tracking. At step 1201 a provisioning instance to be solved is specified. In the following example, x instance 1101 will be provisioned. The syntactical representation of the specific instance to be provisioned may be given by the following clause:
*provision_instance (t (x, 1, 9) , t (x, 1, 2) , adapt, IM)*
*x* instance 1101 has two end points (numbered 1 and 2) which have a behavior link (not shown in Fig. 11). Both the end points should be realized in order to solve the broadband connections planning problem. End point 1 of *x* instance 1201 may be realized in two ways (ie by *tdm* instances 1106 and 1103), whereas end point 2 has only one possible realization (*frame_processor* instance 1105). The algorithm's application of the first fail principle causes end point 2 to be selected and realized by realization link 1114 to end point 2 of *frame_processor* 1105. This may be expressed in the syntactical representation by the following clause:
   *link (t (x,1, 1) , t (frame_processor, 1, 2), realize)*

At step 1203 the algorithm's application of the first fail principle selects the behavior linking *frame_processor* instance' s 1105 end points 1 and 2. This may be expressed as a logical link to be added to the algorithm's Implementation Model in the syntactical representation by the following clause:
*link (t (frame_processor, 1, 2) , t (frame_processor, 1, 1), behavior)*

At step 1204 the algorithm's application of the first fail principle binds end point 1 of *frame_processor* instance 1105 to end point 2 of *atm_switch* instance 1104 using biding link 1120.
*link (t (frame_processor, 1, 1), t (atm_switch, 1, 2), bind)*

As *atm_switch* instance 1105 end point 2 has three possible behavior links (linking it with end points 1, 3 and 4 of *atm_switch* instance 1105). However, end point 1 of *x* instance 1101 has only two possible realizations (linking it to end point 1 of *tdm* instance 1102 or end point 1 of *tdm* instance 1103). The algorithm's application of the first fail principle therefore decides that end point 1 of the x instance is to be attempted to be provisioned, rather than end point 2 of *atm_switch* instance 1104. As the algorithm has no reason to select end point 1 of *tdm* instance 1102 over end point 1 of *tdm* instance 1103 or vice versa, the algorithm (randomly) selects end point 1 of *tdm* instance 1102, realized by realization link 1115.
*link (t (x, 1, 1) , t (tdm, 1, 1), realize)*

At step 1206 the algorithm's application of the hill-climbing principle tries behaviors before bindings, so end points 1 and 2 of the *tdm* instance 1102 are linked by their behavior link:
*link (t (tdm, 1, 1) , t (tdm, 1, 2), behavior)*

At step 1207 end point 2 of *tdm* instance 1102 has two possible bindings (to end point 1 of *avj* instance 1110 and end point 1 of *avj* instance 1111), so the algorithm's application of the first fail principle realizes (1116) end point 1 of *tdm* instance 1102 by end point 1 of *cell_ace* instance 1106:
*link (t (tdm, 1, 1) , t (class_instance, 1, 1) , realize)*

At step 1208 the algorithm's application of the first fail principle selects a behavior link linking end points 1 and 2 of cell_ace instance 1106:
*link (t (cell_ace, 1, 1) , t (cell_ace, 1, 2) , behavior)*

At this point, there are no possible bindings on end point 2 of *cell_ace* instance 1106, so the algorithm's application of the first fail principle causes immediate back-tracking. Fig. 13 of the accompanying drawings illustrates schematically steps 1201 to 1208 of Fig. 12 performed on the simplified Application Model of Fig. 11. Logical links selected are shown as emboldened physical links, apart from logical behaviors (between end points of a single instance) which are implied by emboldened instance boxes. Numerals 1201 to 1208 on Fig. 13 show the order of selection corresponding to the steps of Fig. 12.

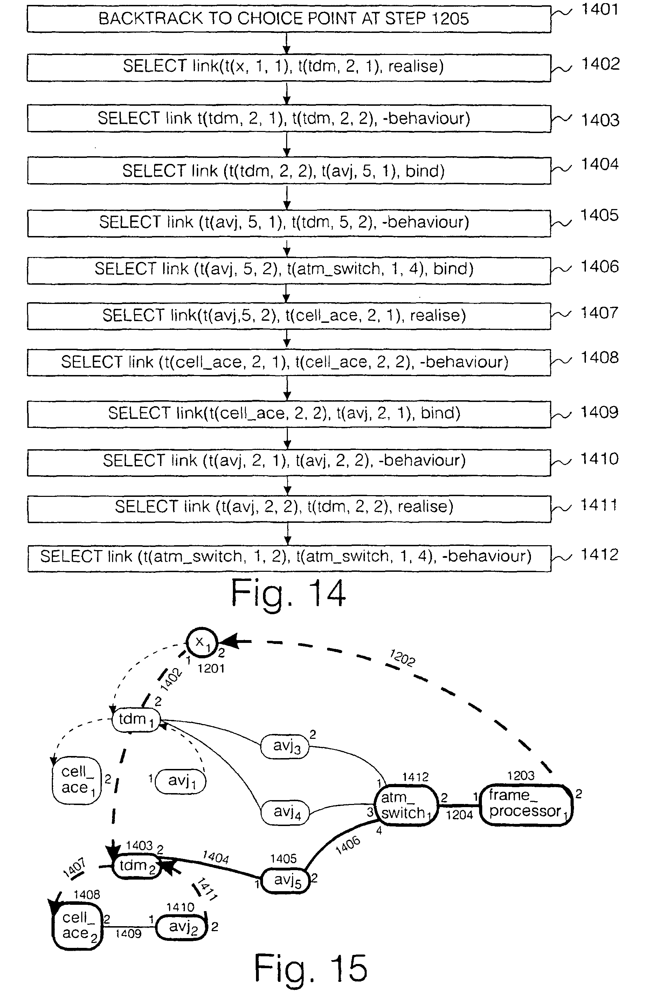

Fig. 14 of the accompanying drawings illustrates the steps preferably executed by the algorithm following step 1208 of Fig. 12. At step 1401 the algorithm back tracks to a choice point occurring at step 1205. At step 1402 the algorithm tries an alternative realization of end point 1 of x instance 1101 by realizing (1113) the end point by end point 1 of *tdm* instance 1103:
*link (t (x, 1, 1) , t (tdm, 2, 1) , realize)*

At step 1403 the algorithm's application of the first fail principle links end points 1 and 2 of *tdm* instance 1103 by a behavior:
*link (t (tdm, 2, 1) , t (tdm, 2, 2) , -behavior)*

At step 1404 the algorithm's application of the hierarchical planning principle binds end point 2 of *tdm* instance 1103 to end point 1 of *avj* instance 1112 by binding link 1127:
*link (t (tdm, 2, 2) , t (avj, 5, 1) , bind)*

At step 1405 the algorithm's application of the hierarchical planning principle links end points 1 and 2 of *avj* instance 1112 by a behavior.
*link (t (avj, 5, 1) , t (avj, 5, 2) , behavior)*

At step 1406 the algorithm's application of the hierarchical planning principle binds end point 2 of *avj* instance 1112 to end point 4 of *atm_switch* instance 1104 by binding link 1123.
*link (t (avj, 5, 2) , t (atm_switch, 1, 4) , bind )*

At step 1407 the algorithm's application of the hierarchical planning principle delays provisioning of *tdm* instance 1103 in order to construct links to *avj* instance 1112 and *atm_switch* instance 1114. However, the algorithm's application of the first fail principle overrides its use of the hierarchical planning principle in this case and delays selection of a behavior linking *atm_switch* instance 1104 and instead provisions *tdm* instance 1103. End point 1 of *tdm* instance 1103 is realized (1119) by end point 1 of *cell_ace* instance 1108:
*link (t (avj, 5, 2) , t (atm_switch, 1, 4) , bind)*

At step 1408 the algorithm's application of the first fail and hierarchical planning principles link end points 1 and 2 of *cell_ace* instance 1108 by a behavior:
*link (t (cell_ace, 2, 1) , t (cell_ace, 2, 2) , behavior)*

At step 1410 the algorithm's application of the first fail and hierarchical planning principles bind end point 2 of *cell_ace* instance 1108 to end point 1 of *avj* instance 1109 by binding link 1128:
*link (t (cell_ace, 2, 2) , t (avj, 2, 1) , bind)*

At step 1411 the algorithm's application of the first fail and hierarchical planning principles link end points 1 and 2 of *avj* instance 1109 by a behavior.
*link (t (avj, 2, 1) , t (avj, 2, 2) , behavior)*

At step 1411 the algorithm's application of the first fail principle realizes (1118) end point 2 of *tdm* instance 1103 by end point 2 of *avj* instance 1109.
*link (t (avj, 2, 2) , t (tdm, 2, 2) , realize)*

At step 1412 the only two end points which still require logical links are end points 2 and 4 of *atm_switch* instance 1104:
*link (t (atm_switch, 1, 2) , t (atm_switch, 1, 4) , -behavior)*

The algorithm's application of the hill-climbing principle selects a behavior between the two end points because the target already had a logical link. Without this heuristic different behaviors might have been invoked (eg linking end points 4 and 3 or end points 2 and 1 of the *atm_switch* instance 1104) causing the two ends of the specified instance to be provisioned to "miss" each other and leading to unnecessary back-tracking.

Fig. 15 of the accompanying drawings illustrates a trace of the execution of the algorithm in a manner similar to Fig. 13, including steps 1201 to 1205 of Fig. 12 and steps 1401 to 1412 of Fig. 14.

Thus, the Implementation Model resulting from the execution of the algorithm as described hereinabove may be as follows:

| IM | link's label in Fig. 11 |
|---|---|
| *t (x, 1, 1) realize t (frame_processor, 1, 2)* | 1114 |
| *t (frame_processor, 1, 2) behavior t (frame_processor, 1, 1)* | 1105 |
| *t (frame_processor, 1, 1) bind t (atm_switch, 1, 2)* | 1120 |
| *t (x, 1, 1) realize t (tdm, 2, 1)* | 1113 |
| *t (tdm, 2, 1) behavior t (tdm, 2, 2)* | 1103 |
| *t (tdm, 2, 2) bind t (avj, 5, 1)* | 1127 |
| *t (avj, 5, 1) behavior t (avj, 5, 2)* | 1112 |
| *t (avj, 5, 2) bind t (atm_switch, 1, 4)* | 1123 |
| *t (avj, 5, 2) realize t (cell_ace, 2, 1)* | 1119 |
| *t (cell_ace, 2, 1) behavior t (cell*_*ace, 2, 2)* | 1108 |
| *t (cell_ace,* 2, *2) bind t (avj, 2, 1)* | 1128 |
| *t (avj, 2, 1) behavior t (avj, 2, 2)* | 1109 |
| *t (avj, 2, 2) realize t (tdm, 2, 2)* | 1118 |
| *t (atm_switch, 1, 2) behavior t (atm_switch, 1, 4)* | 1104 |

The logical links in the resulting implementation model could be displayed to a user, preferably via the network controller in any convenient form, for example a screen display highlighting the logical links on a graphical representation of the graph similar to that shown in fig. 15 or alternatively a list of clauses in the syntactical representation describing the Implementation Model's solution. The resulting Implementation Model could also be used, for example, by a network controller to implement the logical links for connections in the physical network.

## Claims

1. A method of producing a connection plan representing at least one connection between a plurality of end points in a network comprising a plurality of nodes (100, 102, 103, 105) and a plurality of links, each node having at least one end point (206, 207) connecting it to a link, each link being between at least a pair of said end points, and each link having a type, wherein said connection plan comprises data describing a set of said end points and data describing said types of said links between said end points, said method comprising the steps of:
creating a layered data representation of at least part of said network by creating a data representation of the nodes, links and end points of said connection; and
applying an algorithm to said data representation to generate said connection plan, the method being **characterized in that** the step of creating a data representation of said at least one part of the network comprises representing said at least one part of the network as syntax data describing said nodes, links and end points and **in that** the step of applying an algorithm to said data representation comprises manipulating said syntax data by means of an artificial intelligence technique to obtain said connection plan.

2. A method according to claim 1, **characterized in that** a syntax data representation comprises a list of at least one clause, each clause comprising at least one term.

3. A method according to claim 2, **characterized in that** said clauses comprise assertions and implications.

4. A method according to claim 1, **characterized in that** a syntax data representation comprises a list of at least one clause each clause comprising at least one term, and said step of applying an algorithm to generate said connection plan comprises selecting a term (601) of a clause representing said connection as a sub-goal and recursively attempting to solve said sub-goal.

5. A method according to claim 4, **characterized in that** said sub-goal is assigned a priority, and said algorithm selects as said sub-goal (704) a sub-goal with a highest priority or selects a sub-goal (901) which is a clause with fewest terms or selects a sub-goal (903) according to an order of its terms or selects a sub-goal (905) with a lowest position in said network hierarchy or selects a sub-goal (907) randomly.

6. A method according to claim 4 or claim 5, **characterized in that** said algorithm selects a clause (1002) with which to solve said sub-goal according to a position of said clause in said list of clauses or selects a clause (1003) with which to solve said sub-goal by selecting a clause having a term included in said connection plan or selects a clause (1005) with which to solve said sub-goal by selecting a clause which is lowest in said network hierarchy or selects a clause (1007) with which to solve said sub-goal by selecting a clause with a term having a smallest capacity or selects a clause (1009) randomly with which to solve said sub-goal.

7. A method according to any of claims 2 to 6, **characterized in that** said clauses represent data describing features of said network, said features selected from the set:
classes of said network nodes; end points of said network nodes; links of said network;
schematic representations of said link types.

8. A method according to any preceding claim, **characterized in that** said link types may be selected from the set: binding; realization; behavior, containment.

9. A connection planning apparatus for planning at least one connection in a network comprising a plurality of nodes and links, each node having at least one end point connecting it to a link, each link between said end points having a type, said apparatus capable of creating a connection plan comprising a set of end points and said types of links between said end points, said apparatus comprising: means for creating a layered data representation of at least part of said network by creating a data representation of the nodes, links and end points of said connection; and an inference engine (503) comprising an algorithm which uses said data representations to generate said connection plan, the apparatus being **characterized in that** said means for creating a data representation of at least part of said network is arranged to create a syntax data representation describing said nodes, links and end points and **in that** said inference engine comprises an artificial intelligence means adapted to act on said syntax data representation to produce said connection plan.

10. Apparatus according to claim 9, **characterized in that** a syntax data representation comprises a list of at least one clause, each clause comprising at least one term.

11. Apparatus according to claim 10, **characterized in that** said clause comprises a horn clause.

12. Apparatus according to any one of claims 9 to 11, **characterized in that** said inference engine is adapted to select a term (601) of a clause representing said connection as a sub-goal and recursively to attempt to solve said sub-goal.

13. Apparatus according to claim 12, **characterized in that** said sub-goal is assigned a priority, and said inference engine is adapted to select a sub-goal (704) with a highest priority or select a sub-goal (901) which is a clause with fewest terms or select a sub-goal (903) according to an order of its terms or select a sub-goal (905) with a lowest position in said network hierarchy or select a sub-goal (907) randomly.

14. Apparatus according to claim 12 or claim 13, **characterized in that** said inference engine is adapted to select a clause (1002) with which to solve said sub-goal according to a position of said clause in said list of clauses or select a clause (1003) with which to solve said sub-goal by selecting a clause having a term included in said connection plan or select a clause (1005) with which to solve said sub-goal by selecting a clause which is lowest in said network hierarchy or select a clause (1007) with which to solve said sub-goal by selecting a clause with a term having a smallest capacity or select a clause (1009) randomly with which to solve a sub-goal.

15. Apparatus according to any one of claims 10 to 14, **characterized in that** said clauses represent data describing features of said network, said features selected from the set: classes of said network nodes; end points of said network nodes; links of said networks; schemata representing link types.

16. Apparatus according to any one of claims 9 to 15, **characterized in that** said link types may be selected from the set: binding; realization; behavior; containment.

17. A method of processing data describing a hierarchical network comprising a plurality of nodes each said node comprising a set of equipment items, and a plurality of physical links connecting said plurality of nodes, said method **characterized by** comprising the steps of:
representing a node equipment as a syntax data describing said node equipment;
representing a plurality of capabilities of said node equipment by creating syntax data describing said capabilities;
representing said links by syntax data describing said links, wherein said syntax data comprises a plurality of clauses; and
manipulating said clauses by means of an artificial intelligence technique to obtain a solution of connections which are capable of being transformed into a layered connection model suitable for application in said network.

18. A method according to claim 17, **characterized in that** a syntax data capability representation comprises: a node identifier; an input data type; an output data type; and a hierarchical network layer upon which said node appears.

19. A method according to claim 17 or claim 18, **characterized in that** said syntax data representation comprises: at least two nodes representing end points of said links; and a hierarchical network layer upon which said link appears.

20. A method according to any one of claims 17 to 19, **characterized in that** it comprises a substantially Prolog-like syntax.

21. A network management apparatus for a communications network comprising a plurality of interconnected network element devices, said network management apparatus comprising:
a plurality of device controllers (200, 201, 202, 203) each adapted to control at least one corresponding network element device, said plurality of device controllers comprising a plurality of device sub-controllers (206, 207);
wherein a plurality of functions performed by a network element device are each represented by a corresponding respective device sub-controller (206, 207); and **characterized in that**
a set of multi-media service connections between said device controllers are provided, said connections arranged in a manner which represents a multi-media service between said network element devices and wherein each said device sub-controller comprises:
a data storage means for storing syntax data describing a function of a network element device; and a means for generating management control signals from said stored syntax data for controlling a said network element device.

22. A network management apparatus as claimed in claim 21, **characterized in that** the device sub-controller comprises an object data representation.

23. A method of controlling a network comprising a plurality of network element devices wherein each device supports a plurality of service functions, said method comprising the steps of:
representing each network element device by a corresponding device controller;
for each device controller, representing each function capability provided by a corresponding network element device by a corresponding device sub-controller; the method being **characterized by** the steps of:
linking a plurality of said sub-controllers of different device controllers in a manner which represents a layered service connection supported by said network element devices and wherein each said device sub-controller comprises:
a data storage medium for storing syntax data describing a functionality of a network element device; and
a control signal generating means for generating control signals from said stored syntax data for controlling a function of said network element device.

## Patentansprüche

1. Verfahren zur Herstellung eines Verbindungsplans, der zumindest eine Verbindung zwischen einer Mehrzahl von Endpunkten in einem Netzwerk darstellt, das eine Vielzahl von Knoten (100, 102, 103, 105) und eine Vielzahl von Verbindungsstrecken umfasst, wobei jeder Knoten zumindest einen Endpunkt (206, 207) aufweist, der ihn mit einer Verbindungsstrecke verbindet, wobei jede Verbindungsstrecke sich zwischen zumindest einem Paar der Endpunkte erstreckt und jede Verbindungsstrecke einen Typ aufweist, wobei der Verbindungsplan Daten, die einen Satz der genannten Endpunkte beschreiben, und Daten umfasst, die die Typen der Verbindungsstrecken zwischen den Endpunkten beschreiben, wobei das Verfahren die folgenden Schritte umfasst:
Schaffen einer geschichteten Darstellung von zumindest einem Teil des Netzwerkes durch Schaffen einer Datendarstellung der Knoten, Verbindungsstrecke und Endpunkte der Verbindung; und
Anwenden eines Algorithmus auf die Datendarstellung zur Erzeugung des Verbindungsplans, wobei das Verfahren **dadurch gekennzeichnet ist, dass** der Schritt der Schaffung einer Datendarstellung des zumindest einen Teils des Netzwerkes die Darstellung des zumindest einen Teils des Netzwerkes als Syntaxdaten umfasst, die Knoten, Verbindungsstrecken und Endpunkte beschreiben, und dass der Schritt des Anwendens eines Algorithmus auf die Datendarstellung das Manipulieren der Syntaxdaten mit Hilfe einer Künstliche-Intelligenz-Technik umfasst, um den Verbindungsplan zu gewinnen.

2. Verfahren nach nach einem der Anspruch 1, **dadurch gekennzeichnet, dass** eine Syntaxdaten-Darstellung eine Liste von zumindest einer Klausel umfasst, wobei jede Klausel zumindest einen Ausdruck umfasst.

3. Verfahren nach Anspruch 2, **dadurch gekennzeichnet, dass** die Klauseln Aussagen und Bedingungen umfassen.

4. Verfahren nach Anspruch 1, **dadurch gekennzeichnet, dass** eine Syntaxdaten-Darstellung eine Liste mit zumindest einer Klausel umfasst, wobei jede Klausel zumindest einen Ausdruck umfasst, und wobei der Schritt des Anwendens eines Algorithmus zur Erzeugung des Verbindungsplans die Auswahl eines Ausdruckes (601) einer Klausel, der die Verbindung darstellt, als Teilziel und das rekursive Versuchen einer Lösung des Teilziels umfasst.

5. Verfahren nach Anspruch 4, **dadurch gekennzeichnet, dass** dem Teilziel eine Priorität zugeordnet wird, und dass der Algorithmus als das Teilziel (704) ein Teilziel mit einer höchsten Priorität auswählt oder ein Teilziel (901) auswählt, das eine Klausel mit den wenigsten Ausdrücken ist, oder ein Teilziel (903) entsprechend einer Ordnung seiner Ausdrücke auswählt, oder ein Teilziel (905) mit einer niedrigsten Position in der Netzwerk-Hierarchie auswählt, oder ein Teilziel (907) zufällig auswählt.

6. Verfahren nach Anspruch 4 oder 5, **dadurch gekennzeichnet, dass** der Algorithmus eine Klausel (1002), mit der das Teilziel zu lösen ist, entsprechend einer Position der Klausel in der Liste von Klauseln auswählt, oder eine Klausel (1003), mit der das Teilziel zu lösen ist, durch Auswählen einer Klausel mit einem Ausdruck, der in dem Verbindungsplan enthalten ist, auswählt, oder eine Klausel (1005), mit der das Teilziel zu lösen ist, durch Auswählen einer Klausel auswählt, die in der Netzwerk-Hierarchie am niedrigsten ist, oder eine Klausel (1007), mit der das Teilziel zu lösen ist, durch Auswählen einer Klausel mit einem Ausdruck auswählt, die eine kleinste Kapazität aufweist, oder eine Klausel (1009) zufällig auswählt, mit der das Teilziel zu lösen ist.

7. Verfahren nach einem der Ansprüche 2-6, **dadurch gekennzeichnet, dass** die Klauseln Daten darstellen, die Merkmale des Netzwerkes darstellen, und dass die Merkmale aus aus dem folgenden Satz ausgewählt sind: Klassen der Netzwerkknoten, Endpunkte der Netzwerkknoten, Verbindungsstrecken des Netzwerkes; schematische Darstellungen der Verbindungsstrecken-Typen.

8. Verfahren nach einem der vorhergehenden Ansprüche, **dadurch gekennzeichnet, dass** die Verbindungsstrecken-Typen aus dem folgenden Satz ausgewählt werden können: Bindung; Realisierung; Verhalten; Sicherheit.

9. Verbindungsplanungsvorrichtung zum Planen von zumindest einer Verbindung in einem Netzwerk, das eine Vielzahl von Knoten und Verbindungsstrecken aufweist, wobei jeder Knoten zumindest einen Endpunkt aufweist, der ihn mit einer Verbindungsstrecke verbindet, wobei jede Verbindungsstrecke zwischen den Endpunkten einen Typ aufweist, wobei die Vorrichtung in der Lage ist, einen Verbindungsplan zu schaffen, der einen Satz von Endpunkten und den Typen von Verbindungsstrecken zwischen den Endpunkten umfasst, wobei die Vorrichtung Folgendes umfasst: Einrichtungen zur Schaffung einer geschichteten Datendarstellung von zumindest einem Teil des Netzwerkes durch Schaffen einer Datendarstellung der Knoten, Verbindungsstrecken und Endpunkte der genannten Verbindung; und eine Inferenzmaschine (503), die einen Algorithmus umfasst, der die Datendarstellungen verwendet, um den Verbindungsplan zu erzeugen, wobei die Vorrichtung **dadurch gekennzeichnet ist, dass** die Einrichtung zur Schaffung einer Datendarstellung von zumindest einem Teil des Netzwerkes so angeordnet ist, dass sie eine Syntaxdaten-Darstellung schafft, die die Knoten, Verbindungsstrecken und Endpunkte beschreibt, und dass die Inferenzmaschine eine Künstliche-Intelligenz-Einrichtung umfasst, die zur Einwirkung auf die Syntaxdaten-Darstellung ausgebildet ist, um den Verbindungsplan zu erzeugen.

10. Vorrichtung nach Anspruch 9, **dadurch gekennzeichnet, dass** die Syntaxdaten-Darstellung eine Liste von zumindest einer Klausel umfasst, wobei jede Klausel zumindest einen Ausdruck umfasst.

11. Vorrichtung nach Anspruch 10, **dadurch gekennzeichnet, dass** die Klausel eine Horn-Klausel umfasst.

12. Vorrichtung nach einem der Ansprüche 9-11, **dadurch gekennzeichnet, dass** die Inferenzmaschine zur Auswahl eines Ausdruckes (601) einer Klausel ausgebildet ist, der die Verbindung als Teilziel darstellt, und rekursiv das Teilziel zu lösen versucht.

13. Vorrichtung nach Anspruch 12, **dadurch gekennzeichnet, dass** dem Teilziel eine Priorität zugeordnet wird, und dass die Inferenzmaschine zur Auswahl eines Teilziels (704) mit einer höchsten Priorität oder zur Auswahl eines Teilziels (901), das eine Klausel mit den wenigsten Ausdrücken ist, oder zur Auswahl eines Teilziels (903) entsprechend einer Ordnung seiner Ausdrücke oder zur Auswahl eines Teilziels (905) mit einer niedrigsten Position in der Netzwerk-Hierarchie oder zur Auswahl eines Teilziels (907) in zufälliger Weise ausgebildet ist.

14. Vorrichtung nach Anspruch 12 oder 13, **dadurch gekennzeichnet, dass** die Inferenzmaschine zur Auswahl einer Klausel (1002), mit der das Teilziel zu lösen ist, entsprechend einer Position der Klausel in der Liste von Klauseln, oder zur Auswahl einer Klausel (1003), mit der das Teilziel zu lösen ist, durch Auswahl einer Klausel, die einen in dem Verbindungsplan enthaltenen Ausdruck aufweist, oder zur Auswahl einer Klausel (1005), mit der das Teilziel zu lösen ist, durch Auswahl einer Klausel, die in der Netzwerk-Hierarchie am niedrigsten ist, oder zur Auswahl einer Klausel (1007), mit der das Teilziel zu lösen ist, durch Auswahl einer Klausel mit einem Ausdruck, der eine kleinste Kapazität aufweist, oder zur Auswahl einer Klausel (1009) in zufälliger Weise ausgebildet ist, mit der ein Teilziel zu lösen ist.

15. Vorrichtung nach einem der Ansprüche 10-14, **dadurch gekennzeichnet, dass** die Klauseln Daten darstellen, die Merkmale des Netzwerkes beschreiben, wobei die Merkmale aus dem folgenden Satz ausgewählt sind: Klassen der Netzwerkknoten; Endpunkte der Netzwerkknoten; Verbindungsstrecken der Netzwerke, Schemas, die Verbindungsstrecken-Typen darstellen.

16. Vorrichtung nach einem der Ansprüche 9-15, **dadurch gekennzeichnet, dass** die Verbindungsstrecken-Typen aus dem folgenden Satz ausgewählt sind: Bindung; Realisierung; Verhalten; Sicherheit.

17. Verfahren zur Verarbeitung von Daten, die ein hierarchisches Netzwerk beschreiben, das eine Vielzahl von Knoten, wobei jeder Knoten einen Satz von Ausrüstungsposten umfasst, und eine Vielzahl von physikalischen Verbindungsstrecken umfasst, die die Vielzahl von Knoten miteinander verbinden, wobei das Verfahren **dadurch gekennzeichnet ist, dass** es die folgenden Schritte umfasst:
Darstellen einer Knotenausrüstung als Syntaxdaten, die die Knotenausrüstung beschreiben;
Darstellen einer Vielzahl von Fähigkeiten der Knotenausrüstungen durch Schaffen von Syntaxdaten, die die Fähigkeiten beschreiben;
Darstellen der Verbindungsstrecken durch Syntaxdaten, die die Verbindungsstrecken beschreiben, wobei die Syntaxdaten eine Mehrzahl von Klauseln umfassen; und
Manipulieren der Klauseln mit Hilfe einer Künstliche-Intelligenz-Technik zur Erzielung einer Lösung von Verbindungen, die in der Lage sind, in ein geschichtetes Verbindungsmodell transformiert zu werden, das für die Anwendung in dem Netzwerk geeignet ist.

18. Verfahren nach Anspruch 17, **dadurch gekennzeichnet, dass** die Syntaxdaten-Fähigkeitsdarstellung Folgendes umfasst: eine Knotenidentifikation; einen Eingangsdaten-Typ; einen Ausgangsdaten-Typ und eine hierarchische Netzwerk-Schicht, auf der der Knoten erscheint.

19. Verfahren nach Anspruch 17 oder 18, **dadurch gekennzeichnet, dass** die Syntaxdaten-Darstellung Folgendes umfasst: zumindest zwei Knoten, die Endpunkte der Verbindungsstrecken darstellen; und eine hierarchische Netzwerk-Schicht, auf der die Verbindungsstrecke erscheint.

20. Verfahren nach einem der Ansprüche 17-19, **dadurch gekennzeichnet, dass** es eine im Wesentlichen Prolog-artige Syntax umfasst.

21. Netzwerk-Verwaltungsvorrichtung für ein Kommunikationsnetzwerk, das eine Vielzahl von miteinander verbundenen Netzwerkelement-Geräten umfasst, wobei die Netzwerk-Verwaltungsvorrichtung Folgendes umfasst:
eine Vielzahl von Geräte-Steuerungen (200, 201, 202, 203), die jeweils zur Steuerung von zumindest einem entsprechenden Netzwerkelement-Gerät ausgebildet sind, wobei die Vielzahl von Gerätesteuerungen eine Vielzahl von Geräte-Teilsteuerungen (206, 207) umfasst;
wobei eine Vielzahl von von einem Netzwerkelement-Gerät ausgeführten Funktionen jeweils durch eine entsprechende jeweilige Geräte-Teilsteuerung (206, 207) dargestellt ist, **dadurch gekennzeichnet, dass**:
ein Satz von Multimedien-Diensteverbindungen zwischen den Gerätesteuerungen bereitgestellt ist, wobei die Verbindungen in einer Weise angeordnet sind, die einen Multimedien-Dienst zwischen den Netzwerkelement-Geräten darstellt, und wobei jede Geräte-Teilsteuerung Folgendes umfasst:
eine Datenspeichereinrichtung zum Speichern von Syntaxdaten, die eine Funktion eines Netzwerkelement-Gerätes beschreiben; und eine Einrichtung zur Erzeugung von Verwaltungssteuersignalen aus den gespeicherten Syntaxdaten zur Steuerung eines genannten Netzwerkelement-Gerätes.

22. Netzwerk-Verwaltungsvorrichtung nach Anspruch 21, **dadurch gekennzeichnet, dass** die Geräte-Teilsteuerung eine Objektdaten-Darstellung umfasst.

23. Verfahren zur Steuerung eines Netzwerkes mit einer Vielzahl von Netzwerkelement-Geräten, wobei jedes Gerät eine Vielzahl von Dienstefunktionen unterstützt, wobei das Verfahren die folgenden Schritte umfasst:
Darstellen jedes Netzwerkelement-Gerätes durch eine entsprechende Gerätesteuerung;
für jede Gerätesteuerung, Darstellen jeder Funktionsfähigkeit, die von einem entsprechenden Netzwerkelement-Gerät bereitgestellt wird, durch eine entsprechende Geräte-Teilsteuerung; wobei das Verfahren durch die folgenden Schritte gekennzeichnet ist:
Verknüpfen einer Vielzahl der Teilsteuerungen unterschiedlicher Gerätesteuerungen in einer Weise, die eine geschichtete Diensteverbindung darstellt, die durch die Netzwerkelement-Geräte unterstützt ist, wobei jede Geräte-Teilsteuerung Folgendes umfasst:
ein Datenspeichermedium zum Speichern von Syntaxdaten, die eine Funktionalität eines Netzwerkelement-Gerätes beschreiben; und
Steuersignal-Generatoreinrichtungen zur Erzeugung von Steuersignalen aus den gespeicherten Syntaxdaten zur Steuerung einer Funktion des genannten Netzwerkelement-Gerätes.

## Revendications

1. Procédé de production d'un plan de connexions représentant au moins une connexion entre une pluralité de points d'extrémité dans un réseau comprenant une pluralité de noeuds (100, 102, 103, 105) et une pluralité de liaisons, chaque noeud ayant au moins un point d'extrémité (206, 207) le connectant à une liaison, chaque liaison étant entre au moins une paire desdits points d'extrémité, et chaque liaison ayant un type, dans lequel ledit plan de connexions comprend des données décrivant un ensemble desdits points d'extrémité et des données décrivant lesdits types desdites liaisons entre lesdits points d'extrémité, ledit procédé comprenant les étapes consistant à :
créer une représentation de données en couches d'au moins une partie dudit réseau en créant une représentation de données des noeuds, des liaisons et des points d'extrémité de ladite connexion ; et
appliquer un algorithme à ladite représentation de données pour générer ledit plan de connexions, le procédé étant **caractérisé en ce que** l'étape consistant à créer une représentation de données de ladite au moins une partie du réseau comprend l'étape consistant à représenter ladite au moins une partie du réseau sous la forme de données syntaxiques décrivant lesdits noeuds, lesdites liaisons et lesdits points d'extrémité et **en ce que** l'étape consistant à appliquer un algorithme à ladite représentation de données comprend l'étape consistant à manipuler lesdites données syntaxiques au moyen d'une technique d'intelligence artificielle pour obtenir ledit plan de connexions.

2. Procédé selon la revendication 1, **caractérisé en ce qu'**une représentation de données syntaxiques comprend une liste d'au moins une clause, chaque clause comprenant au moins un terme.

3. Procédé selon la revendication 2, **caractérisé en ce que** lesdites clauses comprennent des assertions et des implications.

4. Procédé selon la revendication 1, **caractérisé en ce qu'**une représentation de données syntaxiques comprend une liste d'au moins une clause, chaque clause comprenant au moins un terme, et **en ce que** ladite étape consistant à appliquer un algorithme pour générer ledit plan de connexions comprend l'étape consistant à sélectionner un terme (601) d'une clause représentant ladite connexion comme sous-but et à tenter de résoudre ledit sous-but de manière récursive.

5. Procédé selon la revendication 4, **caractérisé en ce que** ledit sous-but reçoit une priorité, et **en ce que** ledit algorithme sélectionne comme dit sous-but (704) un sous-but avec une priorité maximale ou sélectionne un sous-but (901) qui est une clause avec le moins de termes ou sélectionne un sous-but (903) selon un ordre de ses termes ou sélectionne un sous-but (905) avec une position inférieure dans ladite hiérarchie du réseau ou sélectionne un sous-but (907) de manière aléatoire.

6. Procédé selon la revendication 4 ou 5, **caractérisé en ce que** ledit algorithme sélectionne une clause (1002) permettant de résoudre ledit sous-but selon une position de ladite clause dans ladite liste de clauses ou sélectionne une clause (1003) permettant de résoudre ledit sous-but en sélectionnant une clause ayant un terme inclus dans ledit plan de connexions ou sélectionne une clause (1005) permettant de résoudre ledit sous-but en sélectionnant une clause qui est la moins élevée dans ladite hiérarchie du réseau ou sélectionne une clause (1007) permettant de résoudre ledit sous-but en sélectionnant une clause avec un terme ayant une capacité minimale ou sélectionne une clause (1009) aléatoirement permettant de résoudre ledit sous-but.

7. Procédé selon l'une quelconque des revendications 2 à 6, **caractérisé en ce que** lesdites clauses représentent des données décrivant les caractéristiques dudit réseau, lesdites caractéristiques étant sélectionnées à partir de l'ensemble : des classes desdits noeuds du réseau ; des points d'extrémité desdits noeuds du réseau ; des liaisons dudit réseau ; des représentations schématiques desdits types de liaison.

8. Procédé selon l'une quelconque des revendications précédentes, **caractérisé en ce que** lesdits types de liaison peuvent être sélectionnés à partir de l'ensemble : association ; réalisation ; comportement ; confinement.

9. Appareil de planification de connexions pour planifier au moins une connexion dans un réseau comprenant une pluralité de noeuds et de liaisons, chaque noeud ayant au moins un point d'extrémité le connectant à une liaison, chaque liaison entre lesdits points d'extrémité ayant un type, ledit appareil étant capable de créer un plan de connexions comprenant un ensemble de points d'extrémité et desdits types de liaisons entre lesdits points d'extrémité, ledit appareil comprenant : des moyens pour créer une représentation de données en couches d'au moins une partie dudit réseau en créant une représentation de données des noeuds, des liaisons et des points d'extrémité de ladite connexion ; et un moteur d'inférence (503) comprenant un algorithme qui utilise lesdites représentations de données pour générer ledit plan de connexions, l'appareil étant **caractérisé en ce que** lesdits moyens pour créer une représentation de données d'au moins une partie dudit réseau sont prévus pour créer une représentation de données syntaxiques décrivant lesdits noeuds, lesdites liaisons et lesdits points d'extrémité et **en ce que** ledit moteur d'inférence comprend des moyens d'intelligence artificielle adaptés pour agir sur ladite représentation de données syntaxiques pour produire ledit plan de connexions.

10. Appareil selon la revendication 9, **caractérisé en ce qu'**une représentation de données syntaxiques comprend une liste d'au moins une clause, chaque clause comprenant au moins un terme.

11. Appareil selon la revendication 10, **caractérisé en ce que** ladite clause comprend une clause de Hom.

12. Appareil selon l'une quelconque des revendications 9 à 11, **caractérisé en ce que** ledit moteur d'inférence est adapté pour sélectionner un terme (601) d'une clause représentant ladite connexion comme sous-but et pour tenter de résoudre ledit sous-but de manière récursive.

13. Appareil selon la revendication 12, **caractérisé en ce que** ledit sous-but reçoit une priorité, et **en ce que** ledit moteur d'inférence est adapté pour sélectionner un sous-but (704) avec une priorité maximale ou pour sélectionner un sous-but (901) qui est une clause avec le moins de termes ou pour sélectionner un sous-but (903) selon un ordre de ses termes ou pour sélectionner un sous-but (905) avec une position inférieure dans ladite hiérarchie du réseau ou pour sélectionner un sous-but (907) de manière aléatoire.

14. Appareil selon la revendication 12 ou 13, **caractérisé en ce que** ledit moteur d'inférence est adapté pour sélectionner une clause (1002) permettant de résoudre ledit sous-but selon une position de ladite clause dans ladite liste de clauses ou pour sélectionner une clause (1003) permettant de résoudre ledit sous-but en sélectionnant une clause ayant un terme inclus dans ledit plan de connexions ou pour sélectionner une clause (1005) permettant de résoudre ledit sous-but en sélectionnant une clause qui est la moins élevée dans ladite hiérarchie du réseau ou pour sélectionner une clause (1007) permettant de résoudre ledit sous-but en sélectionnant une clause avec un terme ayant une capacité minimale ou pour sélectionner une clause (1009) aléatoirement permettant de résoudre un sous-but.

15. Appareil selon l'une quelconque des revendications 10 à 14, **caractérisé en ce que** lesdites clauses représentent des données décrivant les caractéristiques dudit réseau, lesdites caractéristiques étant sélectionnées à partir de l'ensemble : des classes desdits noeuds du réseau ; des points d'extrémité desdits noeuds du réseau ; des liaisons dudit réseau ; des schémas représentant les types de liaison.

16. Appareil selon l'une quelconque des revendications 9 à 15, **caractérisé en ce que** lesdits types de liaison peuvent être sélectionnés à partir de l'ensemble : association ; réalisation ; comportement ; confinement.

17. Procédé permettant de traiter des données décrivant un réseau hiérarchique comprenant une pluralité de noeuds, chacun desdits noeuds comprenant un ensemble d'équipements, et une pluralité de liaisons physiques connectant ladite pluralité de noeuds, ledit procédé étant **caractérisé par le fait qu'**il comprend les étapes consistant à :
représenter un équipement de noeud sous la forme de données syntaxiques décrivant ledit équipement de noeud ;
représenter une pluralité de possibilités dudit équipement de noeud en créant des données syntaxiques décrivant lesdites possibilités ;
représenter lesdites liaisons par des données syntaxiques décrivant lesdites liaisons, dans lequel lesdites données syntaxiques comprennent une pluralité de clauses ; et
manipuler lesdites clauses au moyen d'une technique d'intelligence artificielle pour obtenir une solution de connexions qui puissent être transformées en un modèle de connexions en couches approprié pour une application dans ledit réseau.

18. Procédé selon la revendication 17, **caractérisé en ce qu'**une représentation de possibilité de données syntaxiques comprend : un identificateur de noeud ; un type de données d'entrée ; un type de données de sortie ; et une couche réseau hiérarchique sur laquelle ledit noeud apparaît.

19. Procédé selon la revendication 17 ou 18, **caractérisé en ce que** ladite représentation de données syntaxiques comprend : au moins deux noeuds représentant les points d'extrémité desdites liaisons ; et une couche réseau hiérarchique sur laquelle ladite liaison apparaît.

20. Procédé selon l'une quelconque des revendications 17 à 19, **caractérisé en ce qu'**il comprend une syntaxe essentiellement de type Prolog.

21. Appareil de gestion de réseau pour un réseau de communication comprenant une pluralité de dispositifs réseau interconnectés, ledit appareil de gestion de réseau comprenant :
une pluralité de contrôleurs de dispositifs (200, 201, 202, 203) chacun adapté pour contrôler au moins un dispositif réseau correspondant, ladite pluralité de contrôleurs de dispositifs comprenant une pluralité de sous-contrôleurs de dispositifs (206, 207) ;
dans lequel une pluralité de fonctions exécutées par un dispositif réseau sont chacune représentées par un sous-contrôleur de dispositif (206, 207) respectif correspondant ; et **caractérisé en ce que**
une série de connexions de services multimédia entre lesdits contrôleurs de dispositifs est fournie, lesdites connexions étant arrangées d'une manière qui représente un service multimédia entre lesdits dispositifs réseau et dans lequel chaque dit sous-contrôleur de dispositif comprend :
des moyens de stockage de données pour stocker des données syntaxiques décrivant une fonction d'un dispositif réseau ; et des moyens pour générer des signaux de commande de gestion depuis lesdites données syntaxiques stockées pour commander un dit dispositif réseau.

22. Appareil de gestion de réseau selon la revendication 21, **caractérisé en ce que** le sous-contrôleur de dispositif comprend une représentation de données objet.

23. Procédé de contrôle d'un réseau comprenant une pluralité de dispositifs réseau dans lequel chaque dispositif prend en charge une pluralité de fonctions de services, ledit procédé comprenant les étapes consistant à :
représenter chaque dispositif réseau par un contrôleur de dispositif correspondant ;
pour chaque contrôleur de dispositif, représenter chaque possibilité de fonction fournie par un dispositif réseau correspondant par un sous-contrôleur de dispositif correspondant ; le procédé étant **caractérisé par** les étapes consistant à :
relier une pluralité desdits sous-contrôleurs des différents contrôleurs de dispositifs d'une manière qui représente une connexion de services en couches prise en charge par lesdits dispositifs réseau et dans lequel chaque sous-contrôleur de dispositif comprend :
un support de stockage de données pour stocker des données syntaxiques décrivant une fonctionnalité d'un dispositif réseau ; et
des moyens de génération de signaux de commande pour générer des signaux de commande depuis lesdites données syntaxiques stockées pour commander une fonction dudit dispositif réseau.
